# EUROPEAN PATENT APPLICATION

(11) **EP 4 006 609 A1**
(43) Date of publication of application: **01.06.2022**
(21) Application number: 20851612.0
(22) Date of filing: 03.07.2020
(51) Int. Cl.: G02B 13/00, G02B 7/02, H04N 5/225

(54) **UNDER-SCREEN PHOTOGRAPHING ASSEMBLY, PHOTOGRAPHING MODULE, OPTICAL CAMERA, AND MANUFACTURING METHODS FOR PHOTOGRAPHING MODULE AND OPTICAL CAMERA**

(30) Priority: 14.08.2019 CN 201921316866 U; 14.08.2019 CN 201910750248; 14.08.2019 CN 201921315981 U; 14.08.2019 CN 201910749511
(71) Applicant: Ningbo Sunny Opotech Co., Ltd., Ningbo, Zhejiang 315400 (CN)
(72) Inventor: WANG, Mingzhu, Zhejiang 315400 (CN); YAO, Lifeng, Zhejiang 315400 (CN); RONG, Qi, Zhejiang 315400 (CN); MEI, Zhewen, Zhejiang 315400 (CN); GUO, Meishan, Zhejiang 315400 (CN); YUAN, Dongli, Zhejiang 315400 (CN); PEI, Haipeng, Zhejiang 315400 (CN); WANG, Jun, Zhejiang 315400 (CN)
(74) Representative: Patrade A/S
(86) International application number: PCT/CN2020/100164
(87) International publication number: WO 2021/027431

(57) **Abstract**

An optical lens (1000), comprising a first lens element (110) and a second lens component (200). The first lens element (110) has a first surface (112) located on an object side and a second surface (117) located on an image side, wherein a central region of the first surface (112) protrudes toward the object side to form a protruding portion (111), a top surface (113) of the protruding portion (111) forms an optical area (113a), the first surface (112) further has a first structured area (115) surrounding the protruding portion (111), and a side surface (114) connects the optical area (113a) and the first structured area (115). The second lens component (200) comprises a second lens barrel (220) and at least one second lens element (210) mounted inside the second lens barrel (220), and the at least one second lens element (210) and the first lens element (110) together constitute an imageable optical system. The second surface (117) of the first lens element (110) is bonded to a top surface of the second lens barrel (220). Also disclosed are a corresponding camera module, an under-screen camera assembly, an optical lens (1000) and a method for manufacturing the camera module. This optical lens (1000) is helpful to reduce the aperture of the opening of the screen (3000), ensuring a larger field of view and image quality.

## Description

### Cross-Reference to Related Applications

The present application claims the priority of the following four applications: Chinese Patent Application No. 201910749511.6, entitled "UNDER-SCREEN CAMERA ASSEMBLY, CAMERA MODULE AND OPTICAL LENS AND MANUFACTURING METHOD THEREFOR", filed on August 14, 2019; Chinese Patent Application No. 201921316866.8, entitled "UNDER-SCREEN CAMERA ASSEMBLY, CAMERA MODULE AND OPTICAL LENS", filed on August 14, 2019; Chinese Patent Application No. 201910750248.2, entitled "UNDER-SCREEN CAMERA ASSEMBLY, CAMERA MODULE, OPTICAL LENS AND MANUFACTURING METHOD THEREFOR", filed on August 14, 2019; and Chinese Patent Application No. 201921315981.3, entitled "UNDER-SCREEN CAMERA ASSEMBLY, CAMERA MODULE AND OPTICAL LENS", filed on August 14, 2019, the entire contents of which are incorporated herein by reference.

### Technical field

The present invention relates to the technical field of camera modules. Specifically, the present invention relates to an under-screen camera assembly, a corresponding camera module, an optical lens and a manufacturing method therefor.

### Background

With the popularity of mobile electronic devices, the related technologies of camera modules for helping users obtain images (such as videos or pictures) applied in the mobile electronic devices have been developed and advanced rapidly, and in recent years, the camera modules have been widely applied in many fields such as medical treatment, security, industrial production, and so on.

In the field of consumer electronics, such as the field of smartphones, the front camera module is an indispensable assembly. The front camera module is usually disposed on the same side of the display screen to satisfy the user's selfie function and other functions. However, as the screen-to-body ratio becomes larger and larger, higher and higher requirements are also disposed on the arrangement of the front camera lens. In order to reduce the impact of the camera lens on the screen-to-body ratio and achieve a full screen, different manufacturers have developed a variety of solutions from different angles. One technical direction is to arrange the front camera module on the top frame of the mobile phone to form a notch screen or a water drop screen that is close to a full screen. Another technical direction is to use a retractable camera module so as to hide and use the camera lens. When it is necessary to capture images, the camera lens can be controlled to extend out of the casing of the mobile phone (or other electronic devices) for capturing. After the capturing is completed, the camera lens is retracted into the casing of the mobile phone (or other electronic devices). However, during the continuous extension and retraction process of the camera lens and when the camera lens is extended relative to the mobile phone (or other electronic devices), the front camera is easily hit and damaged by external force, and it is difficult to replace it.

At present, a "perforated screen" scheme is often used in the market, and the "perforated screen" scheme usually cooperates with the under-screen camera module to achieve the highest possible screen-to-body ratio of the mobile phone. The "perforated screen" is to form a hole that can transmit visible light by canceling part of the structure in the screen that affects the light received by the lens, and a camera module is disposed at the position corresponding to the hole, so as to achieve the highest possible screen-to-body ratio of the mobile phone while performing front capturing. However, the head size of the current camera modules is above 3 mm. Placing the head of the camera module into the hole will make the size of the screen opening large enough. If the camera module is disposed behind the screen, considering the requirements of the camera module for the viewing angle, the side wall of the screen opening cannot affect the light collection of the camera module. Therefore, the same opening needs to be relatively large, which should be at least 4.5 mm or more. Such a large opening will result in poor display effect of the screen and affect the use experience of the screen. Therefore, it is desirable that the opening of the "perforated screen" is as small as possible.

On the other hand, factors such as high pixels, large aperture, and small size have become an irreversible development trend of camera modules, and consumers' requirements for imaging quality of camera modules are also increasing. Therefore, how to make the front camera module meet the requirements of high pixel, large aperture, small size, etc. while reducing the opening of the "perforated screen" as much as possible without sacrificing its imaging quality is also an urgent problem to be solved in the current market.

### Summary

An objective of the present invention is to overcome the deficiencies of the prior art and provide solutions of an under-screen camera assembly and a corresponding optical lens and camera module.

In order to solve the above technical problems, the present invention provides an optical lens, comprising: a first lens element having a first surface located on an object side and a second surface located on an image side, wherein a central region of the first surface protrudes toward the object side to form a protruding portion, a top surface of the protruding portion forms an optical area for imaging, the first surface further has a first structured area surrounding the protruding portion, and a side surface of the protruding portion connects the optical area and the first structured area; and a second lens component comprising a second lens barrel and at least one second lens element mounted inside the second lens barrel, wherein the at least one second lens element and the first lens element together constitute an imageable optical system; wherein the second surface of the first lens element is bonded to a top surface of the second lens barrel.

In the optical lens, a central axis of the first lens element and a central axis of the second lens component have a non-zero included angle.

In the optical lens, the second surface and the top surface of the second lens barrel are bonded by a first glue material, and the first glue material supports the first lens element and the second lens component after being cured, so that a relative position of the first lens element and the second lens component is maintained at a relative position determined by active alignment, wherein the active alignment is a process of adjusting the relative position of the first lens element and the second lens component according to an actual imaging result of the optical system.

In the optical lens, a side surface of the protruding portion, the first structured area and an outer side surface of the first lens element are each attached with a light-shielding layer.

In the optical lens, the second surface has an optical area for imaging and a second structured area surrounding the optical area, and the second structured area is attached with a light-shielding layer.

In the optical lens, the first lens element is configured as a single lens element or as a composite lens element in which a plurality of sub-lens-elements are fitted with each other, there are a plurality of second lens elements, and the plurality of second lens elements are assembled together through the second lens barrel.

In the optical lens, the first lens element is a molded glass lens element.

In the optical lens, the top surface of the protruding portion has a transition area, the transition area is located at an edge of the top surface, and the transition area is attached with a light-shielding layer.

In the optical lens, a diameter of a cross section of the protruding portion is 1.0 to 2.0 mm.

In the optical lens, a diameter of a cross section of the protruding portion is 1.2 to 1.6 mm.

In the optical lens, a height of the protruding portion is 0.3 to 1.2 mm.

In the optical lens, a height of the protruding portion is 0.4 to 0.8 mm.

In the optical lens, an included angle between a side surface of the protruding portion and an optical axis of the optical lens is less than 15°.

In the optical lens, a refractive index of a material for making the first lens element is 1.48 to 1.55.

In the optical lens, an Abbe number of the first lens element is 50.0 to 70.1.

In the optical lens, a total height of the first lens element is 0.4 to 1.6 mm.

In the optical lens, a total height of the first lens element is 0.6 to 1.2 mm.

In the optical lens, an outer diameter of the first lens element is 3.0 to 4.0 mm.

In the optical lens, an outer diameter of the first lens element is 3.2 to 3.8 mm.

In the optical lens, a thickness of the light-shielding layer is greater than 5 µm.

In the optical lens, a thickness of the light-shielding layer is 15 to 30 µm.

In the optical lens, one or more of the side surface of the protruding portion, the first structured area, the outer side surface of the first lens element, and the second structured area are subjected to surface roughening.

In the optical lens, an outer side surface of the second lens barrel or the first lens element comprises at least one cut surface (or flat section).

In the optical lens, a field of view of the optical lens is greater than 60°.

In the optical lens, a ratio of an aperture of a light inlet hole of the second lens barrel to a diameter of a cross section of the protruding portion is 0.80 to 1.25.

In the optical lens, the optical lens further comprises a light-shielding member comprising an annular light-shielding portion, and the annular light-shielding portion is disposed above the first structured area.

In the optical lens, the light-shielding member is configured as an annular SOMA sheet, and the SOMA sheet is bonded to the first structured area.

In the optical lens, the light-shielding member is configured as a first lens barrel, a bottom surface of the first lens barrel is bonded to a top surface of the second lens barrel, a top of the first lens barrel extends toward the first lens element to form the annular light-shielding portion.

In the optical lens, no glue material is disposed between the annular light-shielding portion and the first structured area.

In the optical lens, the light-shielding member comprises an annular support member and a SOMA sheet, the annular support member surrounds the first lens element, a bottom surface of the annular support member is bonded to a top surface of the second lens barrel, the SOMA sheet is bonded to a top surface of the annular support member, the SOMA sheet is annular, and the SOMA sheet constitutes the annular light-shielding portion.

In the optical lens, no glue material is disposed between the SOMA sheet and the first structured area.

According to another aspect of the present application, there is provided a camera module, comprising: any one of the aforementioned optical lenses; and a photosensitive assembly, wherein the optical lens is mounted on the photosensitive assembly.

In the camera module, a total optical length of the camera module is 3.4 to 4.4 mm.

According to still another aspect of the present application, there is also provided an under-screen camera assembly, comprising: a display screen with a light-passing hole; and any one of the aforementioned camera modules, wherein the protruding portion of the camera module extends into the light-passing hole.

In the under-screen camera assembly, the display screen comprises a substrate, and the first structured area of the camera module is supported on a bottom surface of the substrate.

In the under-screen camera assembly, the display screen comprises a substrate, the substrate has an opening, a diameter of the opening is larger than a diameter of an outer side surface of the first lens element, and the first structured area is located in the opening and supported on the display screen.

According to still another aspect of the present application, there is further provided a method for manufacturing an optical lens, comprising: 1) preparing a first lens element and a second lens component separated from each other, wherein the first lens element has a first surface located on an object side and a second surface located on an image side, and wherein a central region of the first surface protrudes toward the object side to form a protruding portion, a top surface of the protruding portion forms an optical area for imaging, the first surface also has a first structured area surrounding the protruding portion, a side surface of the protruding portion connects the optical area and the first structured area, and the second lens component comprises a second lens barrel and at least one second lens element mounted inside the second lens barrel; 2) pre-positioning the first lens element and the second lens component, so that the at least one second lens element and the first lens element together constitute an imageable optical system; 3) performing active alignment on the first lens element and the second lens component; and 4) bonding a bottom surface of the first lens element to a top surface of the second lens barrel, so that a relative position of the first lens element and the second lens component is maintained at a relative position determined by active alignment.

In the method for manufacturing an optical lens, in the step 1), the first lens element is manufactured by a glass molding process, and the protruding portion is processed by a cutting or grinding process, so that an included angle between a side surface of the protruding portion and an optical axis of the optical lens is less than 15°.

According to still another aspect of the present application, there is further provided a method for manufacturing an optical lens, comprising: 1) preparing a first lens element, a second lens component, and a light-shielding member separated from each other, wherein the first lens element has a first surface located on an object side and a second surface located on an image side, and wherein a central region of the first surface protrudes toward the object side to form a protruding portion, a top surface of the protruding portion forms an optical area for imaging, the first surface also has a first structured area surrounding the protruding portion, a side surface of the protruding portion connects the optical area and the first structured area, the second lens component comprises a second lens barrel and at least one second lens element mounted inside the second lens barrel, and the light-shielding member comprise an annular light-shielding portion; 2) pre-positioning the first lens element and the second lens component, so that the at least one second lens element and the first lens element together constitute an imageable optical system; 3) performing active alignment on the first lens element and the second lens component; 4) bonding a bottom surface of the first lens element to a top surface of the second lens barrel, so that a relative position of the first lens element and the second lens component is maintained at a relative position determined by active alignment; and 5) bonding the light-shielding member to a combination of the first lens element and the second lens component, and making the annular light-shielding portion disposed above the first structured area.

In the method for manufacturing an optical lens, in the step 1), the light-shielding member is configured as a first lens barrel, wherein a top of the first lens barrel extends toward the first lens element to form the annular light-shielding portion; and in the step 5), the first lens barrel is bonded to the second lens barrel through a third glue material, wherein the third glue material is arranged on a top surface of the second lens barrel, and the third glue material surrounds an outer side of the first lens element.

In the method for manufacturing an optical lens, in the step 1), the light-shielding member is configured as an annular SOMA sheet; and in the step 5), a bottom surface of the SOMA sheet is bonded to the first structured area.

In the method for manufacturing an optical lens, in the step 1), the light-shielding member comprises an annular support member and a SOMA sheet, wherein the SOMA sheet is annular and constitutes the annular light-shielding portion; and in the step 5), a bottom surface of the annular support member is bonded to a top surface of the second lens barrel, so that the annular support member surrounds the first lens element, and then the SOMA sheet is bonded to a top surface of the annular support member.

According to still another aspect of the present application, there is provided a method for manufacturing a camera module, comprising: a) manufacturing an optical lens according to any one of the aforementioned methods for manufacturing an optical lenss; and b) assembling the optical lens with a photosensitive assembly together to obtain a camera module.

In the method for manufacturing a camera module, in the step b), based on an active alignment process, the optical lens and the photosensitive assembly are bonded together by a second glue material.

In the method for manufacturing a camera module, in the step b), active alignment is performed between the second lens component and the photosensitive assembly, and the active alignment between the first lens element and the second lens component in the step 3) is performed simultaneously with the active alignment between the second lens component and the photosensitive assembly in the step b).

Compared with the prior art, the present application has at least one of the following technical effects:
1. The optical lens and camera module of the present application are helpful to reduce the aperture of the screen opening.
2. The optical lens and camera module of the present application can reduce the influence of the screen aperture on the field of view of the lens.
3. The optical lens and the camera module of the present application can reduce the influence of stray light on the imaging of the camera module.
4. The optical lens and camera module of the present application can improve the imaging quality of the lens.
5. The present application can reduce the volume of the lens.
6. The present application can reduce the space that the terminal device needs to reserve for the camera module.
7. In some embodiments of the present application, the ink layer can be sprayed from only one direction (that is, sprayed from the side of the first lens element), which reduces the difficulty of the process, facilitates improving the production efficiency and production yield, and is especially suitable for large-scale production.
8. In some embodiments of the present application, the distance from the SOMA sheet to the first structured area of the first lens element can be minimized, so that the protruding portion of the first lens element can more fully extend into the light-passing hole of the display screen, which is more helpful to reduce the aperture of the light-passing hole of the display screen on the premise of maintaining the image quality.

### Brief description of the drawings

FIG. 1 shows a schematic cross-sectional view of an optical lens 1000 according to an embodiment of the present application;
FIG. 2 shows a partially enlarged schematic view of a first lens element and its surrounding structure in an embodiment of the present application;
FIG. 3 shows a partially enlarged schematic view of a first lens element and its surrounding structure in another embodiment of the present application;
FIG. 4 shows a schematic cross-sectional view of a first lens element in an embodiment of the present application;
FIG. 5 shows a schematic cross-sectional view of a camera module according to an embodiment of the present application;
FIG. 6 shows a schematic perspective view of an optical lens in an embodiment of the present application;
FIG. 7a shows a schematic top view of an example of an optical lens in which a second lens barrel has one single cut surface, FIG. 7b shows a schematic top view of an example of an optical lens in which a second lens barrel has two cut surfaces, and FIG. 7c shows a schematic top view of an example of an optical lens in which a second lens barrel has four cut surfaces;
FIG. 8a shows a schematic diagram of an example in which a camera module with cut surface(s) is disposed at a position close to a frame of a mobile phone, and FIG. 8b shows a schematic diagram of another example in which a camera module with cut surface(s) is disposed at a position close to a frame of a mobile phone;
FIG. 9 shows a schematic cross-sectional view of an under-screen camera assembly in an embodiment of the present application;
FIG. 10 shows a schematic cross-sectional view of an under-screen camera assembly in another embodiment of the present application;
FIG. 11 shows a schematic cross-sectional view of an optical lens 1000 according to an embodiment of the present application;
FIG. 12 shows a schematic cross-sectional view of an optical lens 1000 according to another embodiment of the present application;
FIG. 13 shows a schematic cross-sectional view of an optical lens 1000 according to still another embodiment of the present application;
FIG. 14 shows a schematic cross-sectional view of a camera module according to an embodiment of the present application;
FIG. 15 shows a schematic cross-sectional view of an under-screen camera assembly in an embodiment of the present application; and
FIG. 16 shows a schematic cross-sectional view of an under-screen camera assembly in another embodiment of the present application.

### Detailed description of the embodiments

In order to better understand the present application, various aspects of the present application will be described in more detail with reference to the drawings. It should be understood that the detailed illustration is merely description of exemplary implementations of the present application, and does not limit the scope of the present application in any way. Throughout the description, the same reference numerals refer to the same elements. The expression "and/or" includes any and all combinations of one or more of the associated listed items.

It should be noted that in the present description, the expressions of "first", "second", etc. are only used to distinguish one feature from another feature, and do not indicate any limitation on the respective feature. Therefore, without departing from the teachings of the present application, a first main body discussed below may also be referred to as a second main body.

In the drawings, for convenience of explanation, the thickness, size, and shape of the object have been slightly exaggerated. The drawings are only examples and are not drawn strictly to scale.

It should also be understood that the terms "comprising", "comprise", "having", "including" and/or "include" when used in the present description, indicate the existence of stated features, integers, steps, operations, elements and/or components, but does not exclude the presence or addition of one or more other features, integers, steps, operations, elements, components and/or combinations thereof. Furthermore, when an expression such as "at least one of" appears after a list of listed features, it modifies the entire list of features, rather than individual elements in the list. In addition, when describing an implementation of the present application, "may" is used to denote "one or more implementations of the present application". Also, the term "exemplary" is intended to refer to an example or illustration.

As used herein, the terms "substantially", "approximately" and similar terms are used as a term expressing an approximation and not as a term expressing an extent, and are intended to indicate an inherent deviation in a measurement value or calculated value, which will be recognized by those of ordinary skill in the art.

Unless otherwise defined, all terms (including technical and scientific terms) used herein have the same meanings as commonly understood by those of ordinary skill in the art to which the present application belongs. It should also be understood that the terms (such as those defined in commonly used dictionaries) should be interpreted to have meanings consistent with their meaning in the context of the relevant art and will not be interpreted in an idealized or overly formal sense unless it is clearly defined herein.

It needs to be noted that, in the case of no conflict, the embodiments in the present application and the features in the embodiments may be combined with each other. The present application will be described in detail below in conjunction with embodiments with reference to the drawings.

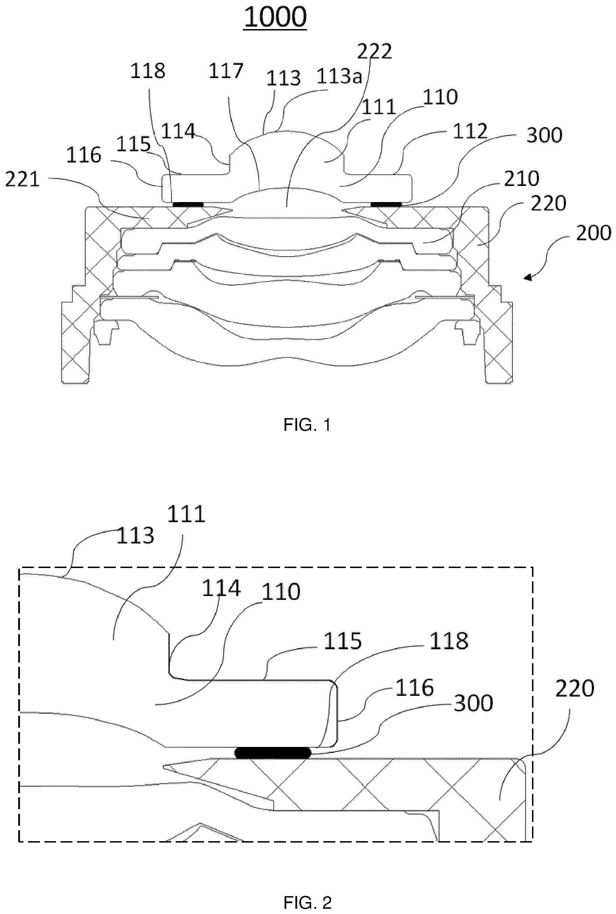

FIG. 1 shows a schematic cross-sectional view of an optical lens 1000 according to an embodiment of the present application. Referring to FIG. 1, in this embodiment, the optical lens 1000 includes a first lens element 110 and a second lens component 200. The first lens element 110 herein may be understood as a first lens component. In this embodiment, the first lens component is composed of a single first lens element 110. The first lens element 110 is generally a piece of lens. The first lens element 110 has a first surface 112 located on an object side and a second surface 117 located on an image side, wherein a central region of the first surface 112 protrudes toward the object side to form a protruding portion 111, a top surface 113 of the protruding portion 111 forms an optical area 113a for imaging, the first surface 112 also has a first structured area 115 surrounding the protruding portion 111, and a side surface 114 of the protruding portion 111 connects the optical area 113a and the first structured area 115. Herein, the structured area is a non-optical area, which may also be referred to as an optically inactive region. In this embodiment, the second lens component 200 includes a second lens barrel 220 and a plurality of second lens elements 210 mounted inside the second lens barrel 220, wherein the plurality of second lens elements 210 and the first lens element 110 together they form an imageable optical system. The second surface 117 of the first lens element 110 is bonded to a top surface of the second lens barrel 220. Specifically, a second structured area 118 of the second surface 117 of the first lens element 110 is bonded to the top surface of the second lens barrel 220. In this embodiment, the first lens element 110 and the top surface of the second lens barrel 220 are bonded by a first glue material 300, and the first glue material 300 supports the first lens element 110 and the second lens component 200 after being cured, so that a relative position of the first lens element 110 and the second lens component 200 is maintained at a relative position determined by active alignment, wherein the active alignment is a process of adjusting the relative position of the first lens element 110 and the second lens component 200 according to an actual imaging result of the optical system. During active alignment, a pickup mechanism (e.g., a clamping mechanism) can move the first lens element in multiple degrees of freedom with clamping the outer side of the first lens element, thereby adjusting the relative position of the first lens element and the second lens component, and then finding the position where the actual imaging result of the optical system can be optimized. The actual imaging result here refers to an actual image received and output by a photosensitive chip disposed at a rear end of the second lens element. The photosensitive chip may be a photosensitive chip specially used for the active alignment process (in this case, the photosensitive chip can be disposed in an active alignment device), or it may be a photosensitive chip in a photosensitive assembly to be assembled (in this case, the photosensitive chip used for active alignment will eventually be assembled with the calibrated optical lens to form a camera module). Since the first lens element has manufacturing tolerances in the manufacturing process, and there are manufacturing tolerances and assembly tolerances between the lens elements in the second lens component, after active alignment, a central axis of the first lens element and a central axis of the second lens component can have a non-zero included angle, so that the above-mentioned manufacturing and assembly tolerances can be compensated. The optical lens of this embodiment is particularly suitable for use in an under-screen camera module. In the optical lens of this embodiment, since the first lens element 110 is exposed outside the second lens barrel 220, the protruding portion 111 can extend into a small hole of the display screen (namely a light-passing hole in the display screen reserved for the under-screen camera module). Therefore, the light incident surface of the optical lens is closer to the upper surface of the display screen, so that the light collected by the optical lens is less affected by the side wall of the small hole of the display screen. In this way, the optical lens can obtain a larger field of view, so that the aperture of the small hole (the reserved light-passing hole) of the display screen can be reduced while ensuring the amount of light entering the optical lens. Further, in this embodiment, the first lens element is fixed on the second lens barrel by bonding the bottom surface of the first lens element to the top surface of the second lens barrel (for example, through the second structured area of the second surface). This design solution can expose the first lens element so as to facilitate active alignment. The shape of the first lens element is specially designed, especially with the protruding portion 111, and the molding difficulty of this first lens element may be higher than that of ordinary lens elements (e.g., the second lens element). Therefore, the manufacturing tolerance of the first lens element may be higher than that of ordinary lens elements, and in mass production, the consistency of the optical parameters and performance of the first lens element may also be insufficient. If the above factors are not reasonably considered, then the actual imaging quality of the actual mass-produced optical lens may not be as expected, resulting in a series of problems such as a decrease in production yield. However, in this embodiment, problems such as manufacturing tolerances or insufficient consistency of the first lens element itself can be avoided or suppressed through an active alignment process, thereby ensuring the imaging quality of actual mass-produced products while improving the production yield.

Further, still referring to FIG. 1, in an embodiment of the present application, bonding surfaces of the first lens element and the second lens barrel (which can be understood as a region of the bottom surface of the first lens element that is in contact with the first glue material and a region of the top surface of the second lens barrel that is in contact with the first glue material) are all set as planes. The optical lens may encounter a high temperature and high humidity environment or a mechanical shock environment. Setting the bonding surfaces of the first lens element and the second lens barrel to the planes can reduce the influence of the variation of the first glue material caused by the above environment factors on the relative position of the first lens element and the second lens barrel in the horizontal direction, thereby solving or alleviating the problem of the deterioration of the imaging quality of the optical lens caused by the variation of the first glue material.

Further, FIG. 2 shows a partially enlarged schematic view of a first lens element and its surrounding structure in an embodiment of the present application. Referring FIGS. 1 and 2, in this embodiment, the side surface 114 of the protruding portion 111 of the first lens element 110, the first structured area 115 of the first surface 112 and an outer side surface 116 of the first lens element 110 are each attached with an ink layer. The second surface 117 has an optical area for imaging and a second structured area 118 surrounding the optical area. Further, in one embodiment, the second structured area 118 of the second surface 117 may also be attached with an ink layer. The above-mentioned areas of the first lens element 110 being attached with ink layers can reduce stray light. In addition, the ink layer can also function as an optical diaphragm to control the amount of light entering the camera module. That is, the optical diaphragm of the optical lens is disposed on the first surface of the first lens element. In other embodiments of the present application, the ink layer may also be replaced by a light-shielding layer formed of other materials and attached to the above-mentioned areas of the first lens element. For example, an opaque material may be attached by means of coating to form the light-shielding layer.

Further, still referring to FIG. 1, in an embodiment of the present application, in the optical lens, there are a plurality of second lens elements 210, and the plurality of second lens elements 210 are assembled together through the second lens barrel 220. Specifically, an inner surface of the second lens barrel 220 may be formed with multiple steps, and when the second lens elements 210 are assembled, the second lens elements 210 may be embedded in the multiple steps in order from small to large. After the plurality of second lens elements 210 are assembled together, the positions of the lens elements are fixed, thereby forming a stable group of lens pieces.

In the foregoing embodiments, the first lens element is configured as a single independent lens element, but the present application is not limited to this. For example, in another embodiment of the present application, the first lens element may be a composite lens element formed by fitting a plurality of sub-lens-elements with each other. At the active alignment phase, the composite lens element can move as a whole and adjust its relative positional relationship to the second lens component.

Further, still referring to FIG. 1, in an embodiment of the present application, in the optical lens 1000, on the premise of being assembled by the second lens barrel 220, a plurality of second lens elements 210 may also be fitted with each other (usually, the second structured areas of the second lens elements are fitted with each other, and the structured area is a non-optical area, or referred to as an optically inactive region), thereby further improving the stability of the group of lens pieces. Further, gaskets may also be disposed between the plurality of second lens elements 210 to improve the stability of the optical lens structure.

Further, in an embodiment of the present application, since the height of the protruding portion of the first lens element is relatively high, it has a great influence on the light transmittance of the optical lens. Therefore, in order to ensure that the photosensitive chip of the camera module can obtain more light for imaging, the first lens element may be made of glass material. Further, since the light incident surface of the first lens element is usually aspherical, the first lens element may be a molded glass lens element. The molding principle of the molded glass lens element includes: placing a preformed glass blank in a precision processing molding mould, increasing the temperature to soften the glass, and then applying pressure on the surface by the mold core to make the glass deformed and taken out of the mould, so that the lens shape, as required, may be formed. The molded glass is manufactured by the molding mould. The side wall of the protruding portion of the first lens element after molding may not be strictly parallel to the optical axis. For example, there may be a large included angle between the side wall of the protruding portion and the optical axis (i.e., an inclination angle of a side wall of the protruding portion). At this time, the first lens element may be ground by cold working technology, so that the included angle between the side wall of the protruding portion of the first lens element and the optical axis is less than 15°. In this way, it can be avoided that the maximum diameter of the protruding portion (i.e., the diameter at the root of the protruding portion) is too large due to the inclination angle of the side wall of the protruding portion being too large. If the diameter of the root of the protruding portion is too large, as a result, the aperture of the opening of the display screen has to be increased.

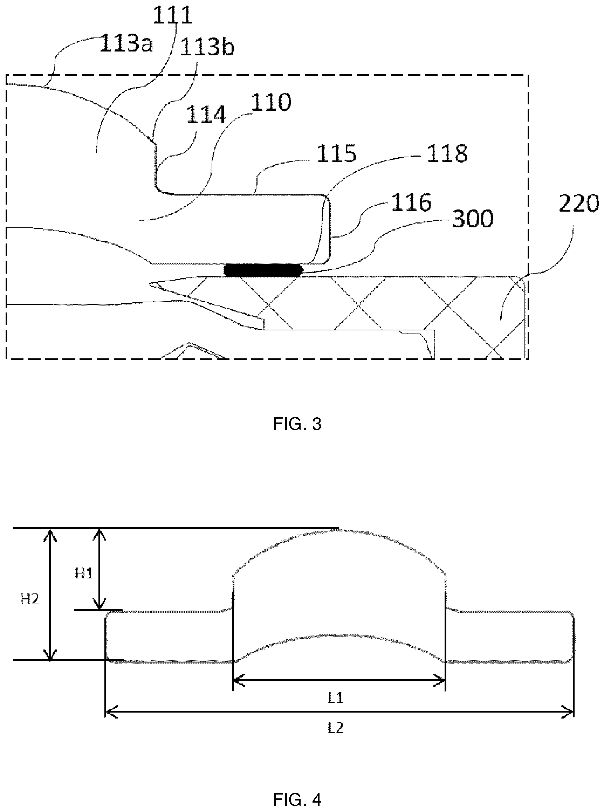

Further, FIG. 3 shows a partially enlarged schematic view of a first lens element and its surrounding structure in another embodiment of the present application. In this embodiment, the top surface 113 of the protruding portion 111 has an optical area 113a and a transition area 113b, the transition area 113b is located at an edge of the top surface 113, and the transition area 113b may be attached with an ink layer. In this embodiment, the shape of the first lens element 110 is special (for example, it has a protruding portion 111), and the molding precision at the edge of the lens element may be difficult to control during the shape-molding and die-sinking process for the molded glass. Therefore, in this embodiment, there is a transition area 113b between the top 113 and the side wall 114 of the protruding portion 111 of the first lens element 110, and the transition area 113b can be provided with (i.e., attached with) a light-shielding material, so that light cannot pass through such transition area so as to reduce the influence of this area on optical imaging. Preferably, the transition area has a width of about 0.03 to 0.05 mm from the side wall of the protruding portion to the center position (the width refers to a radial dimension, i.e., a dimension in the direction perpendicular to the optical axis of the optical lens). In other embodiments, the width of the transition area may be other values, depending on the molding accuracy of the molded glass.

Further, FIG. 4 shows a schematic cross-sectional view of a first lens element in an embodiment of the present application. Referring to FIG. 4, in an embodiment of the present application, a diameter L1 of a cross section of the protruding portion may be 1.0 to 2.0 mm. Preferably, the diameter L1 of the cross section of the protruding portion may be 1.2 to 1.6 mm. The above parameter ranges can be applied to the first lens element made of glass, but it should be noted that these parameter ranges are not limited to the glass material, and they may also be applied to the first lens element of other materials.

Further, still referring to FIG. 4, in an embodiment of the present application, a height H1 of the protruding portion may be 0.3 to 1.2 mm. Preferably, the height H1 of the protruding portion may be 0.4 to 0.8 mm. The height of the protruding portion is a height from the first structured area of the first surface to the arc top of the protruding portion, and the height is a dimension along the direction of the optical axis of the optical lens. The above parameter ranges can be applied to the first lens element made of glass, but it should be noted that these parameter ranges are not limited to the glass material, and they may also be applied to the first lens element of other materials.

Further, still referring to FIG. 4, in an embodiment of the present application, a total height H2 of the first lens element may be 0.4 to 1.6 mm. Preferably, the total height H2 of the first lens element may be 0.6 to 1.2 mm. The total height of the first lens element is a height from the second structured area of the second surface to the arc top of the protruding portion, and the height is a dimension along the direction of the optical axis of the optical lens. The above parameter ranges can be applied to the first lens element made of glass, but it should be noted that these parameter ranges are not limited to the glass material, and they may also be applied to the first lens element of other materials. Referring to FIG. 4, in this embodiment, a thickness of the structured area of the first lens element is equal to: the total height H2 of the first lens element - the height H1 of the protruding portion. Generally speaking, the smaller the thickness of the structured area of the first lens element, the more favorable the protruding portion 111 is to extend into the light-passing hole of the display screen more fully. However, if the thickness of the structured area is too small, the first lens element will be easily bent during the clamping and moving process, which may cause the active alignment to fail to achieve the expected effect, thereby resulting in a decrease in image quality. Specifically, if the thickness of the structured area is too small, when a fixture clamps the first lens element, the first lens element may be bent. Although this bending may be very small, due to the optical system (especially the optical system of the camera module of the mobile phone) is very precise and sensitive, even a very small deformation of the first lens element will cause variation in the imaging results obtained by the photosensitive chip, resulting in the failure of active alignment to achieve the expected effect.

Further, still referring to FIG. 4, in an embodiment of the present application, the outer diameter L2 of the first lens element may be 3.0 to 4.0 mm. Preferably, the outer diameter L2 of the first lens element may be 3.2 to 3.8 mm. If the outer diameter L2 is too small, the area available for arranging the first glue material may become smaller, which affects the stability and reliability of the bonding. However, if the outer diameter L2 is too large, the first lens element is likely to be bent during the clamping and moving process, which may lead to the failure of the active alignment to achieve the expected effect, thereby resulting in a decrease in image quality. Specifically, if the outer diameter L2 of the first lens element is too large, when the fixture clamps the first lens element, the first lens element may be bent. Although this bending may be very small, due to the optical system (especially the optical system of the camera module of the mobile phone) is very precise and sensitive, even a very small deformation of the first lens element will cause variation in the imaging results obtained by the photosensitive chip, resulting in the failure of active alignment to achieve the expected effect.

The above parameter ranges can be applied to the first lens element made of glass, but it should be noted that these parameter ranges are not limited to the glass material, and they may also be applied to the first lens element of other materials.

Further, referring to FIG. 1, in an embodiment of the present application, the top of the second lens barrel 220 of the second lens component extends inwardly (extends toward the center of the optical system) to form a light inlet hole 222. The light inlet hole 222 refers to a light inlet hole through which the light beam enters the second lens component. For convenience of description, the inwardly extending part of the top of the second lens barrel 220 is referred to as an extension portion 221. The bottom surface of the extension portion 221 can support a first second lens element, thereby making the assembly of the second lens elements more stable. In this embodiment, the size of the aperture of the extension portion 221 of the second lens barrel 220 (i.e., the aperture of the light inlet hole 222) is related to the diameter of the imaging beam here of the optical lens, and the diameter of the imaging beam here is associated with the diameter of the optical area 113a for imaging on the top surface 113 of the protruding portion 111 of the first lens element. If the aperture of the extension portion is too small, it will limit the passage of the imaging beam, resulting in a decrease in the amount of incoming light received by the photosensitive chip. If the size is too large, it will cause the MTF value of the optical lens described in the present application (or other parameter values that can characterize the resolution of the output image of the photosensitive chip) to be reduced, and the problem of stray light will be aggravated. The imaging quality of the optical lens may be degraded due to the limitation of the imaging beam of the optical lens, the reduction of the MTF value and the aggravation of the stray light problem. Therefore, in this embodiment, a ratio of the aperture of the extension portion 221 of the second lens barrel 220 (i.e., the aperture of the light inlet hole 222 of the second lens barrel 220) to the diameter of the optical area 113a may be set to 0.80 to 1.25. Further, in some embodiments, due to the limitation of the molding process, the top surface 113 of the protruding portion 111 of the first lens element also has a transition area 113b. Since this size is relatively small, the ratio of the aperture of the extension portion 221 of the second lens barrel 220 (i.e., the aperture of the light inlet hole 222 of the second lens barrel 220) to the cross-sectional diameter of the protruding portion 111 may also be about 0.80 to 1.25.

Further, in an embodiment of the present application, the diameter of the cross section of the protruding portion of the first lens element is less than one third of the outer diameter of the second lens barrel. The outer diameter of the second lens barrel refers to an outer diameter of the largest outer dimension of the second lens barrel. The largest outer dimension of the second lens barrel is generally located at the bottom of the second lens barrel (i.e., a side of the optical system close to the image side). Generally speaking, a plurality of second lens elements are embedded in the second lens barrel in order from small to large, and the lens element with the largest size is usually located at the bottom end. Therefore, the largest outer dimension of the second lens barrel is also generally located at the bottom of the second lens barrel. However, it should be noted that under special circumstances, the largest outer dimension of the second lens barrel may also be located at other positions. Further, in a preferred embodiment, the outer diameter of the second lens barrel (i.e., the outer diameter of the largest outer dimension of the second lens barrel) is not less than 4 mm.

Further, in an embodiment of the present application, a refractive index of a material for making the first lens element is 1.48 to 1.55. An Abbe number of the first lens element may be 50.0 to 70.1. The first lens element usually adopts an aspherical surface, and when the first lens element is made of glass material, the first lens element is usually made by using a process of molding glass. Because molding glass needs to use a mould to press the glass for processing, and usually molding a glass to make a biconcave lens will cause greater damage to the mould, thus a first surface (i.e., an object side surface) of the first lens element is preferably a convex surface. In this embodiment, the first lens element has a relatively thick thickness relative to the lateral dimension. Correspondingly, the refractive index of the molding material of the lens element is preferably 1.48 to 1.55, and the Abbe number of the first lens element is preferably 50.0 to 70.1, which can better control the imaging quality of the split lens assembly.

Further, in an embodiment of the present application, a field of view (i.e., FOV) of the optical lens is greater than 60°. As mentioned above, the optical lens of the present application has a first lens element, the first lens element has a protruding portion, and the protruding portion can extend into a light-passing hole with a smaller aperture (referring to the light-passing hole of the display screen). Therefore, the light incident surface of the optical lens (the optical area of the first surface of the first lens element) can be closer to the upper surface of the display screen, so that the angle of view of the optical lens is relatively less affected by the diameter of the small hole of the display screen. Therefore, in this embodiment, the field of view (i.e., FOV) of the optical lens may be greater than 60°. Preferably, the field of view of the optical lens may be greater than 75°.

Further, in an embodiment of the present application, a thickness of the ink layer of the first lens element is greater than 5 µm. Preferably, in order to make the ink layer have better light-shielding effect while making the thickness of the ink layer have less influence on the height H1 of the protruding portion 111, the thickness of the ink layer of the first lens element may be 15 to 30 µm.

Further, in an embodiment of the present application, in the first lens element, the side surface of the protruding portion, the first structured area of the first surface, the outer side surface of the first lens element, and the second structured area of the second surface is subjected to surface roughening. The surface roughening may be achieved, for example, by means of grinding. Roughening of the above-mentioned areas of the first lens element can not only reduce the influence of stray light on the imaging of the camera lens, but also improve the bonding strength of the ink layer and the lens elements, so that the ink is not easy to fall off during the use of the camera lens, and the influence of dirt on the imaging of the camera lens is reduced. In a modified embodiment, the surface roughened area may also be one, two or three of the side surface of the protruding portion, the first structured area of the first surface, the outer side surface of the first lens element, and the second structured area of the second surface.

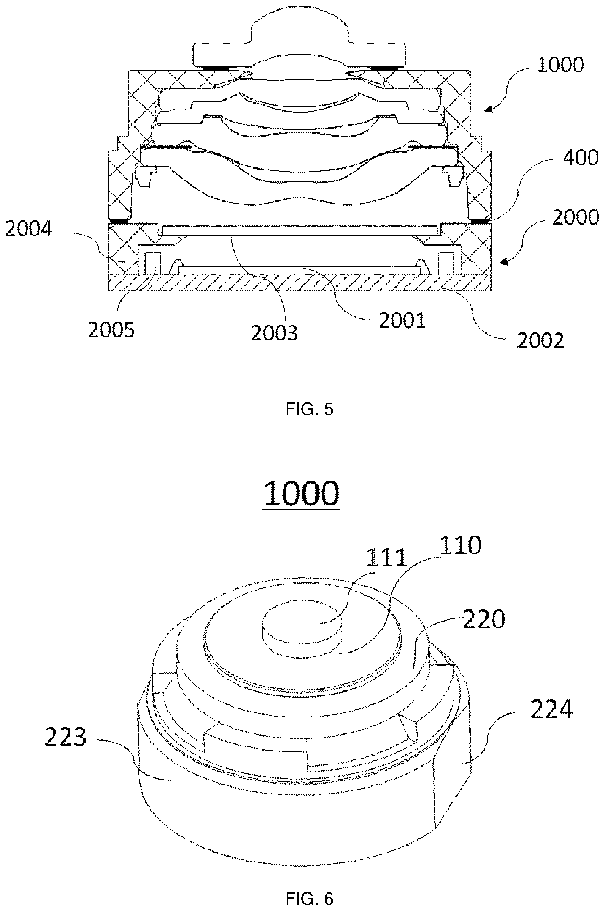

Further, FIG. 5 shows a schematic cross-sectional view of a camera module according to an embodiment of the present application. Referring to FIG. 5, according to an embodiment of the present application, a camera module is provided. The camera module includes an optical lens 1000 and a photosensitive assembly 2000. The optical lens 1000 is mounted on the photosensitive assembly 2000. Specifically, the optical lens 1000 may be bonded to the photosensitive assembly 2000 through a second glue material 400. The optical lens may be the optical lens shown in FIG. 1, and its specific structure will not be repeated here. The photosensitive assembly 2000 may include a photosensitive chip 2001, a circuit board 2002, a color filter 2003, a lens holder 2004 and an electronic element 2005. The photosensitive chip 2001 is bonded to an upper surface of the circuit board 2002. The lens holder 2004 is mounted on the upper surface of the circuit board 2002 and surrounds the photosensitive chip 2001. A top surface of the lens holder can be used as a mounting surface of the optical lens 1000. The color filter 2003 is mounted on the lens holder 2004. The electronic element 2005 may also be mounted on the upper surface of the circuit board. The photosensitive chip 2001 and the circuit board 2002 may be electrically connected through a wire bonding process. The connecting wire may be gold wire or other metal wire with good electrical conductivity.

Further, in an embodiment of the present application, a total optical length (TTL) of the camera module may be 3.4 to 4.4 mm.

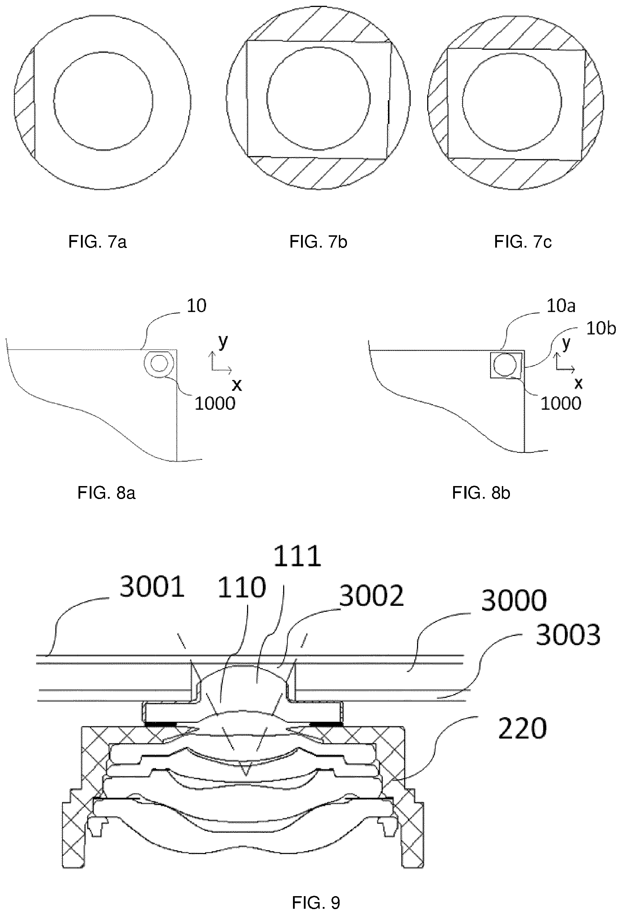

Further, in an embodiment of the present application, in the optical lens, a side surface of the second lens barrel may have a cut surface (or flat section). FIG. 6 shows a schematic perspective view of an optical lens 1000 in an embodiment of the present application. Referring to FIG. 6, in an embodiment of the present application, the optical lens 1000 includes a first lens element 110 and a second lens component. The second lens component includes a second lens barrel 220 and a plurality of second lens elements mounted in the second lens barrel 220 (the second lens elements are shielded in FIG. 6). The first lens element 110 is bonded to the top surface of the second lens barrel 220. In this embodiment, the outer side surface 223 of the second lens barrel 220 has a cut surface 224. The cut surface 224 enables the front camera module to be arranged at a position closer to a frame of a casing of an electronic device (e.g., a mobile phone). FIGS. 7a, 7b, and 7c show schematic top views of three cutting manners of the second lens barrel, respectively. Specifically, FIG. 7a shows a schematic top view of an example of an optical lens in which the second lens barrel has one single cut surface, FIG. 7b shows a schematic top view of an example of an optical lens in which the second lens barrel has two cut surfaces, and FIGS. 7c shows a schematic top view of an example of an optical lens in which the second lens barrel has four cut surfaces. In FIGS. 7a, 7b, and 7c, the shaded portions represent cut regions. Further, FIG. 8a shows a schematic diagram of an example in which a camera module with a cut surface is disposed at a position close to the frame of the mobile phone, and FIG. 8b shows a schematic diagram of another example in which a camera module with a cut surface is disposed at a position close to the frame of the mobile phone. It can be seen that cutting the side of the second lens barrel is helpful to dispose the camera module to a position closer to the frame of the mobile phone. As shown in FIG. 8a, the optical lens 1000 of the front camera module may have a cut surface, and the cut surface may be disposed close to a top frame 10 of a terminal device (e.g., a mobile phone). As shown in FIG. 8b, the optical lens 1000 of the front camera module may have four cut surfaces, wherein the top and right cut surfaces may be disposed close to the top frame 10a and the right frame 10b of the terminal device (e.g., the mobile phone), respectively. In FIGS. 8a and 8b, x and y coordinate axes represent two coordinate axes of a rectangular coordinate system on a plane perpendicular to the optical axis of the camera module (i.e., a plane on which the display screen surface is located), respectively.

Further, in another embodiment, the outer side surface of the first lens element may also include a cut surface, and there may be one or more cut surfaces. For its cutting manner, reference may be made to FIGS. 7a, 7b, and 7c.

Further, FIG. 9 shows a schematic cross-sectional view of an under-screen camera assembly in an embodiment of the present application. Referring to FIG. 9, according to an embodiment of the present application, an under-screen camera assembly is also provided. The under-screen camera assembly includes: a display screen 3000 and a camera module (it should be noted that only its optical lens is shown in FIG. 9, while its photosensitive assembly is not shown). The display screen 3000 has a light-passing hole 3002. Specifically, the display screen 3000 has a front surface and a back surface, wherein the front surface is a surface on which an image is displayed, and the back surface is a surface opposite thereto. In the under-screen camera assembly, the display screen 3000 has a light-passing hole 3002 so that external light can enter the camera module located under the screen. The light-passing hole 3002 may be a through hole or a blind hole. The front surface of the display screen 3000 may be covered with a transparent cover plate 3001, and at the light-passing hole 3002, the cover plate 3001 may not be punched (as shown in FIG. 9). When the cover plate 3001 is not punched, that is, when the cover plate 3001 is complete, it can play a better role in dust prevention and protection. It should be noted that, in other embodiments, the cover plate may also be punched at the light-passing hole 3002. Further, in this embodiment, the optical lens of the camera module may be the optical lens 1000 shown in FIG. 1, the optical lens has a first lens element 110, and the first lens element 110 has a protruding portion 111. In this embodiment, the protruding portion 111 extends into the light-passing hole 3002. The display screen 3000 may further include a substrate 3003, and the substrate 3003 is located on the back surface of the display screen 3000. Therefore, the substrate 3003 may also be referred to as a backplane. In this embodiment, the first structured area of the first surface (i.e., the upper surface) of the first lens element 110 of the camera module may be located below the bottom surface of the substrate 3003. A small gap may remain between the first structured area of the first surface and the bottom surface of the substrate. The solution of this embodiment can enable the optical lens to obtain a larger field of view (the field of view is represented by a dotted line in FIG. 9), and is helpful to reduce the aperture of the light-through hole of the display screen on the premise of ensuring the amount of incoming light of the optical lens, thereby improving the visual effect and user experience of the display screen. In this embodiment, the gap between the protruding portion 111 and the display screen cover plate 3001 (or referred to as a cover plate layer) may be 0.01 to 0.5 mm. The gap between the protruding portion 111 and the display screen cover plate 3001 can be understood as a gap between the arc top of the top surface of the protruding portion 111 and the display screen cover plate 3001. In this embodiment, a light-shielding layer may also be provided in the non-optical area of the first lens element. For details, please refer to FIGS. 2 and 3 and the corresponding aforementioned embodiments, which will not be repeated here.

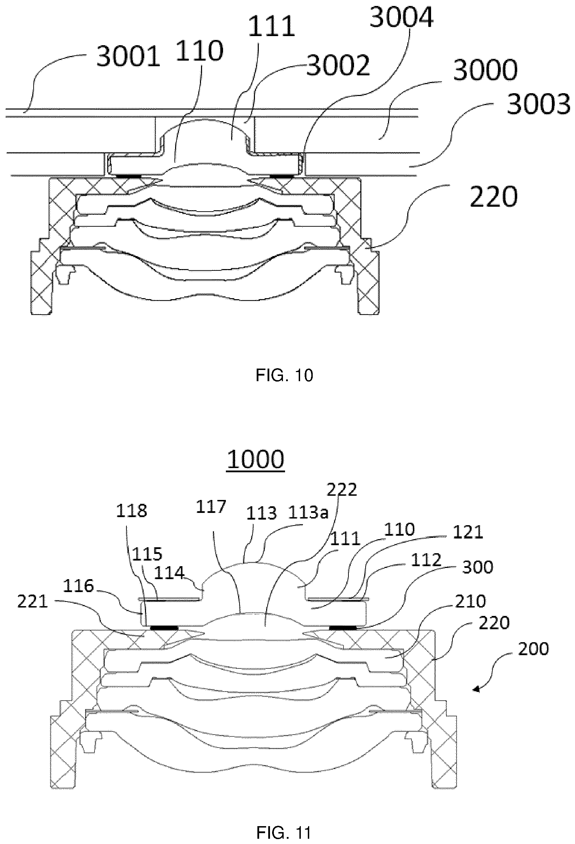

FIG. 10 shows a schematic cross-sectional view of an under-screen camera assembly in another embodiment of the present application. Referring to FIG. 10, in another embodiment of the present application, the substrate 3003 (or the backplane) of the display screen 3000 may have an opening 3004, and a diameter of the opening 3004 is larger than a diameter of an outer side surface of the first lens element 110 (for the meaning of the outer side surface, reference may be made to FIG. 1 and the description of the corresponding embodiment). The opening 3004 of the substrate 3003 may also be referred to as a mounting hole. The first structured area of the first surface (i.e., the upper surface) of the first lens element 110 may be located within the opening 3004. That is, at least a part of the outer side surface of the first lens element 110 is disposed in the opening 3004 (i.e., the mounting hole) of the substrate 3003. In this solution, the protruding portion 111 can more fully extend into the light-passing hole 3002 of the display screen 3000, so that the light incident surface of the optical lens is closer to the upper surface of the display screen (in other words, it is closer to the cover plate). In this way, the optical lens can obtain a larger field of view (the field of view is represented by a dotted line in FIG. 10), and it is helpful to reduce the aperture of the light-passing hole of the display screen on the premise of ensuring the amount of incoming light of the optical lens, thereby improving the visual effect and user experience of the display screen. In this embodiment, the gap between the protruding portion and the display screen cover plate (or referred to as the cover plate layer) may be 0.01 to 0.5 mm. The gap between the protruding portion 111 and the display screen cover plate 3001 can be understood as a gap between the arc top of the top surface of the protruding portion 111 and the display screen cover plate 3001. In this embodiment, a light-shielding layer may also be provided in the non-optical area of the first lens element. For details, please refer to FIGS. 2 and 3 and the corresponding aforementioned embodiments, which will not be repeated here.

In the above embodiment, the display screen may be an OLED display screen or an LCD display screen.

Further, according to an embodiment of the present application, a method for manufacturing an optical lens is further provided. The method includes the following steps S1 to S4.

Step S1: A first lens element and a second lens component separated from each other are prepared. Still referring to FIG. 1, the first lens element 110 has a first surface 112 located on an object side and a second surface 117 located on an image side, wherein a central region of the first surface 112 protrudes toward the object side to form a protruding portion 111, a top surface 113 of the protruding portion 111 forms an optical area 113a for imaging, the first surface 112 also has a first structured area 115 surrounding the protruding portion 111, and a side surface 114 of the protruding portion 111 connects the optical area 113a and the first structured area 115. The second lens component 200 includes a second lens barrel 220 and a plurality of second lens elements 210 mounted inside the second lens barrel 220, wherein the plurality of second lens elements 210 and the first lens element 110 together form an imageable optical system.

Step S2: The first lens element 110 and the second lens component 200 are pre-positioned. In this step, the first lens element 110, the second lens component 200 and the photosensitive assembly (which may be a photosensitive assembly to be assembled, or a photosensitive assembly or photosensitive chip equipped by an active alignment device) are arranged along an optical axis, so that the optical system composed of the first lens element lens 110 and the second lens component 200 can perform imaging. At this time, the first lens element 110 and the second lens component 200 can be regarded as a split lens assembly. In this embodiment, the second lens component 200 may be disposed on a carrying table, the carrying table may have a light-through hole, and the photosensitive assembly may be disposed below the light-through hole of the carrying table. The first lens element 110 may be clamped and moved by a six-axis movable fixture. The six axes will be specifically explained in step S3. The fixture can clamp the outer side surface of the first lens element to pick up and move the first lens element 110. In another embodiment, the fixture can pick up and move the first lens element 110 by clamping the side surface of the protruding portion.

Step S3: Active alignment is performed. In this step, the photosensitive assembly is energized / electrified to obtain an image formed by the split lens assembly, the image quality of the split lens assembly and its adjustment amount are calculated through an image algorithm such as SFR and MTF, and a relative position between a first lens component (in this embodiment, the first lens component refers to the first lens element 110) and the second lens component is actively adjusted in real time in at least one direction of the six-axis directions according to the adjustment amount. After one or more adjustments, the imaging quality of the split lens assembly (mainly including optical parameters such as peak value, field curvature, astigmatism, etc.) reaches a target value. The six-axis directions may be x, y, z, u, v and w directions, wherein the x, y, and z directions are horizontal and vertical directions, i.e, directions of three coordinate axes in the three-dimensional Cartesian coordinate system, and u, v and w directions are directions of rotation around x, y, and z axes, respectively.

Step S4: Finally, the first lens element 110 and the second lens component 200 are bonded by a first glue material 300. After the first glue material 300 is cured, the first lens element 300 and the second lens component 200 can be maintained at the relative positions determined by the active alignment.

In the above-mentioned embodiment, the application of the first glue material may be performed before the pre-positioning (i.e., step S2), or may be performed after the active alignment (i.e., step S3) is completed. When the application of the first glue material is performed after the active alignment (i.e., step S3) is completed, the first lens component can be moved away at first, and then the first glue material is applied on the second lens component (the top surface of the second lens barrel). After that, step S4 is performed to cure the first glue material. In the present application, the first glue material is suitable for curing by means of at least one of visible light, ultraviolet light, baking, etc.

Further, in an embodiment of the present application, in the step S1, the first lens element is manufactured by a glass molding process, and the protruding portion is processed by a removal process such as cutting or grinding, so that the included angle between the side surface of the protruding portion and the optical axis of the optical lens is less than 15°.

Further, according to an embodiment of the present application, a method for manufacturing a camera module is further provided. The method includes step a and step b.

Step a: An optical lens is manufactured according to the method for manufacturing an optical lens (steps S1 to S4) in the aforementioned embodiment.

Step b: The optical lens and a photosensitive assembly are assembled together to obtain a camera module.

In the step b, based on an active alignment process, the optical lens and the photosensitive assembly are bonded together by a second glue material. In an embodiment, the optical lens may be assembled at first, and then the optical lens and the photosensitive assembly may be assembled. The process of assembling the optical lens and the photosensitive assembly may be a traditional active alignment process (AA process, which refers to an active alignment process without adjusting the optical system itself, that is, the camera lens and the photosensitive assembly are bonded and fixed upon adjusting the relative position between the optical lens and the photosensitive assembly), or may be a traditional bracket attachment process (HA process, that is, the camera lens is directly attached to the photosensitive assembly by means of mechanical positioning such as visual recognition).

Further, in another embodiment of the present application, in the step b, the active alignment may be performed between the second lens component and the photosensitive assembly. In addition, the active alignment between the first lens element and the second lens component in the step S3 and the active alignment between the second lens component and the photosensitive assembly in the step b may be performed simultaneously. Then, the first lens element and the second lens component (which may be bonded by the first glue material), and the second lens component and the photosensitive assembly (which may be bonded by the second glue material) are bonded, respectively, so as to form a complete camera module.

FIG. 11 shows a schematic cross-sectional view of an optical lens 1000 according to an embodiment of the present application. Referring to FIG. 11, in this embodiment, the optical lens 1000 includes a first lens element 110, a second lens component 200 and a SOMA sheet 121. The first lens element 110 may be understood as a first lens component. In this embodiment, the first lens component is composed of a single first lens element 110. The first lens element 110 is generally a piece of lens. The first lens element 110 has a first surface 112 located on an object side and a second surface 117 located on an image side, wherein a central region of the first surface 112 protrudes toward the object side to form a protruding portion 111, a top surface 113 of the protruding portion 111 forms an optical area 113a for imaging, the first surface 112 also has a first structured area 115 surrounding the protruding portion 111, and a side surface 114 of the protruding portion 111 connects the optical area 113a and the first structured area 115. Herein, the structured area is a non-optical area, or may be referred to as an optically inactive region. In this embodiment, the second lens component 200 includes a second lens barrel 220 and a plurality of second lens elements 210 mounted inside the second lens barrel 220, wherein the plurality of second lens elements 210 and the first lens element 110 together they form an imageable optical system. The second surface 117 of the first lens element 110 is bonded to a top surface of the second lens barrel 220. Specifically, a second structured area 118 of the second surface 117 of the first lens element 110 is bonded to the top surface of the second lens barrel 220. In this embodiment, the first lens element 110 and the top surface of the second lens barrel 220 are bonded by a first glue material 300, and the first glue material 300 supports the first lens element 110 and the second lens component 200 after being cured, so that a relative position of the first lens element 110 and the second lens component 200 is maintained at a relative position determined by active alignment, wherein the active alignment is a process of adjusting the relative position of the first lens element 110 and the second lens component 200according to an actual imaging result of the optical system. During active alignment, a pickup mechanism (e.g., a clamping mechanism) can move the first lens element in multiple degrees of freedom by clamping the outer side of the first lens element, thereby adjusting the relative position of the first lens element and the second lens component, and then finding the position where the actual imaging result of the optical system can be optimized. The actual imaging result here refers to an actual image received and output by a photosensitive chip disposed at a rear end of the second lens element. The photosensitive chip may be a photosensitive chip specially used for the active alignment process (in this case, the photosensitive chip can be disposed in an active alignment device), or it may be a photosensitive chip in a photosensitive assembly to be assembled (in this case, the photosensitive chip used for active alignment will eventually be assembled with the calibrated optical lens to form a camera module). Since the first lens element has manufacturing tolerances in the manufacturing process, and there are manufacturing tolerances and assembly tolerances between the lens elements in the second lens component, after active alignment, a central axis of the first lens element and a central axis of the second lens component can have a non-zero included angle, so that the above-mentioned manufacturing and assembly tolerances can be compensated. The optical lens of this embodiment is particularly suitable for use in an under-screen camera module. In the optical lens of this embodiment, since the first lens element 110 is exposed outside the second lens barrel 220, the protruding portion 111 can extend into a small hole of the display screen (namely a light-passing hole in the display screen reserved for the under-screen camera module). Therefore, the light incident surface of the optical lens is closer to the upper surface of the display screen, so that the light collected by the optical lens is less affected by the side wall of the small hole of the display screen. In this way, the optical lens can obtain a larger field of view, so that the aperture of the small hole (the reserved light-passing hole) of the display screen can be reduced while ensuring the amount of light entering the optical lens. Further, in this embodiment, the first lens element is fixed on the second lens barrel by bonding the bottom surface of the first lens element to the top surface of the second lens barrel (for example, through the second structured area of the second surface). This design solution can expose the first lens element so as to facilitate active alignment. The shape of the first lens element is specially designed, especially with the protruding portion 111, and the molding difficulty of this first lens element may be higher than that of ordinary lens elements (e.g., the second lens element). Therefore, the manufacturing tolerance of the first lens element may be higher than that of ordinary lens elements, and in mass production, the consistency of the optical parameters and performance of the first lens element may also be insufficient. If the above factors are not considered, then the actual imaging quality of the actual mass-produced optical lens may not be as expected, resulting in a series of problems such as a decrease in production yield. However, in this embodiment, problems such as manufacturing tolerances or insufficient consistency of the first lens element itself can be avoided or suppressed through an active alignment process, thereby ensuring the imaging quality of actual mass-produced products while improving the production yield. Further, in this embodiment, the SOMA sheet 121 is bonded to the first structured area 115. In this way, the SOMA sheet 121 can form a light-shielding portion, thereby preventing or inhibiting stray light from entering the optical system of the optical lens. The SOMA sheet is a SOMA light-shielding sheet, and sometimes referred to as Mylar sheet. It is a kind of light-shielding sheet made of SOMA shading material, which is usually a black thermoplastic film with a thickness of tens to hundreds of microns with high light-shielding performance in form (in the prior art, SOMA sheets are commonly used in lens assemblies. Specifically, the SOMA sheets are typically cushioned between structured areas of adjacent lens elements within the lens barrel).

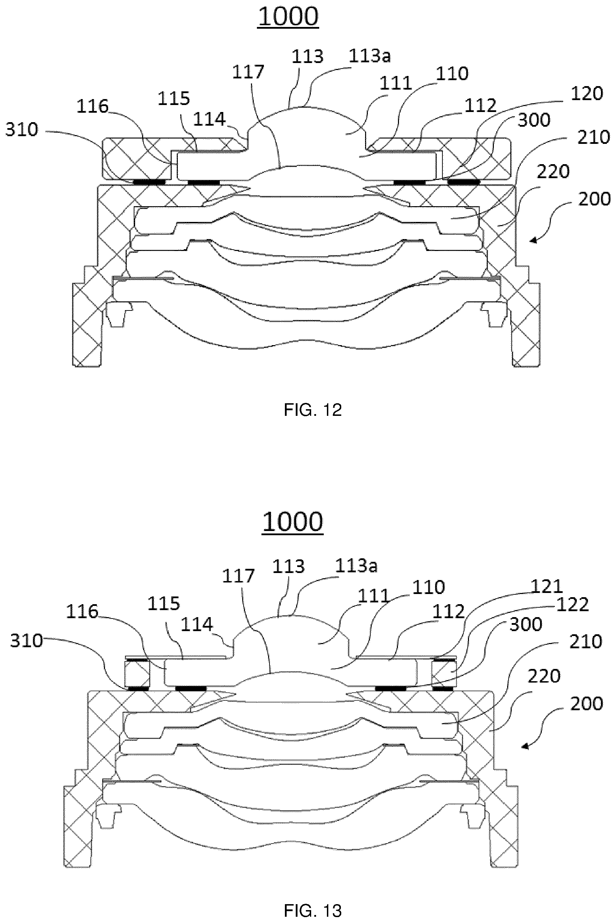

FIG. 12 shows a schematic cross-sectional view of an optical lens 1000 according to another embodiment of the present application. Different from the embodiment of FIG. 11, in this embodiment, the SOMA sheet 121 is replaced by a first lens barrel 120. A bottom surface of the first lens barrel 120 is bonded to the top surface of the second lens barrel 220, and the top of the first lens barrel 120 extends toward the first lens element 110 to form a light-shielding portion. The light-shielding portion is annular and surrounds the protruding portion 111. Further, in an embodiment, it is feasible that no glue material is disposed between the annular light-shielding portion and the first structured area 115. For example, the annular light-shielding portion may directly contact the first structured area 115. In this embodiment, the first lens barrel 120 can play a role of shielding light, and can also play a role of protecting the first lens element. It should be noted that in this application, the bonding manner of the first lens barrel 120 is not limited to the above-mentioned embodiment. For example, in another embodiment, the bottom surface of the first lens barrel 120 may also be bonded to the top surface of the first lens element 120, thereby fixing the first lens barrel to the optical lens 1000.

FIG. 13 shows a schematic cross-sectional view of an optical lens 1000 according to still another embodiment of the present application. Different from the embodiment of FIG. 11, in this embodiment, the SOMA sheet 121 is replaced by a composite light-shielding member. The composite light-shielding member includes an annular support 122 and a SOMA sheet 121. The annular support member 122 surrounds the first lens element 110. A bottom surface of the annular support member 122 is bonded to the top surface of the second lens barrel 220. A top surface of the annular support member 122 is bonded to the SOMA sheet 121. The SOMA sheet 121 is annular, and the SOMA sheet 121 constitutes an annular light-shielding portion for shielding the first structured area 115. Further, in an embodiment, no glue material is disposed between the SOMA sheet 121 and the first structured area. In this way, the SOMA sheet 121 can be closer to the first structured area (if the SOMA sheet 121 is bonded to the first structured area 115, a certain thickness of glue material is required between the SOMA sheet 121 and the first structured area 115, so that the SOMA sheet 121 cannot be as close to the first structured area 115 as possible), so that the protruding portion 111 of the first lens element 110 can more fully extend into the light-passing hole of the display screen, which is more helpful to reduce the aperture of the light-passing hole of the display screen on the premise of maintaining the image quality. In this embodiment, the annular support member 122 can play a role of shielding light, and can also play a role of protecting the first lens element.

Further, still referring to FIG. 11 (or referring to FIGS. 12 and 13), in an embodiment of the present application, bonding surfaces of the first lens element and the second lens barrel (which can be understood as a region of the bottom surface of the first lens element that is in contact with the first glue material and a region of the top surface of the second lens barrel that is in contact with the first glue material) are all set as planes. The optical lens may encounter a high temperature and high humidity environment or a mechanical shock environment. Setting the bonding surfaces of the first lens element and the second lens barrel to the planes can reduce the influence of the variation of the first glue material caused by the above environment on the relative position of the first lens element and the second lens barrel in the horizontal direction, thereby solving or alleviating the problem of the deterioration of the imaging quality of the optical lens caused by the variation of the first glue material.

Further, still referring to FIG. 3, in this embodiment, the side surface 114 of the protruding portion 111 of the first lens element 110 and/or the outer side surface 116 of the first lens element 110 are/is attached with an ink layer. It should be noted that an independent light-shielding member is not shown in FIG. 3. The independent light-shielding member refers to the SOMA sheet 121 shown in FIG. 11, the first lens barrel 120 shown in FIG. 12, or the composite light-shielding member shown in FIG. 13. The ink layer may be used in cooperation with the light-shielding member so as to improve the effect of reducing stray light. In other embodiments of the present application, the ink layer may also be replaced by a light-shielding layer formed of other materials and attached to the above-mentioned areas of the first lens element. For example, an opaque material may be attached by means of coating to form the light-shielding layer. Further, in this embodiment, the ink layer is used in cooperation with the independent light-shielding member, so that it is only necessary to attach an ink layer to the side surface 114 of the protruding portion 111 of the first lens element 110, or the outer side surface 116 of the first lens element 110, or the side surface 114 of the protruding portion 111 of the first lens element 110 and the outer side surface 116 of the first lens element 110. No matter which of the above arrangement of the ink layer, the ink layer only needs to be sprayed from one direction (that is, sprayed from the side of the first lens element), thus reducing the difficulty of the process, which is advantageous to improve the production efficiency and production yield, especially suitable for large-scale production.

Further, still referring to FIG. 11 (or referring to FIGS. 12 and 13), in an embodiment of the present application, in the optical lens, there are a plurality of second lens elements 210, and the plurality of second lens elements 210 are assembled together through the second lens barrel 220. Specifically, an inner surface of the second lens barrel 220 may be formed with multiple steps, and when the second lens elements 210 are assembled, the second lens elements 210 may be embedded in the multiple steps in order from small to large. After the plurality of second lens elements 210 are assembled together, the positions of the lens elements are fixed, thereby forming a stable group of lens pieces.

In the foregoing embodiments, the first lens element is configured as a single independent lens element, but the present application is not limited to this. For example, in another embodiment of the present application, the first lens element may be a composite lens element formed by fitting a plurality of sub-lens-elements with each other. At the active alignment phase, the composite lens element can move as a whole and adjust its relative positional relationship to the second lens component.

Further, still referring to FIG. 11, in an embodiment of the present application, in the optical lens 1000, on the premise of being assembled by the second lens barrel 220, a plurality of second lens elements 210 may also be fitted with each other (usually, the second structured areas of the second lens elements are fitted with each other, and the structured area is a non-optical area, or referred to as an optically inactive region), thereby further improving the stability of the group of lens pieces. Further, gaskets may also be disposed between the plurality of second lens elements 210 to improve the stability of the optical lens structure.

Further, in an embodiment of the present application, since the height of the protruding portion of the first lens element is relatively high, it has a great influence on the light transmittance of the optical lens. Therefore, in order to ensure that the photosensitive chip of the camera module can obtain more light for imaging, the first lens element may be made of glass material. Further, since the light incident surface of the first lens element is usually aspherical, the first lens element may be a molded glass lens element. The molding principle of the molded glass lens element includes: placing a preformed glass blank in a precision processing molding mould, increasing the temperature to soften the glass, and then applying pressure on the surface by the mold core to make the glass deformed and taken out of the mould, so that the lens shape, as required, may be formed. The molded glass is manufactured by the molding mould. The side wall of the protruding portion of the first lens element after molding may not be strictly parallel to the optical axis. For example, there may be a large included angle between the side wall of the protruding portion and the optical axis (i.e., an inclination angle of a side wall of the protruding portion). At this time, the first lens element may be ground by cold working technology, so that the included angle between the side wall of the protruding portion of the first lens element and the optical axis is less than 15°. In this way, it can be avoided that the maximum diameter of the protruding portion (i.e., the diameter at the root of the protruding portion) is too large due to the inclination angle of the side wall of the protruding portion being too large. If the diameter of the root of the protruding portion is too large, as a result, the aperture of the opening of the display screen has to be increased.

Further, still referring to FIG. 3, in an embodiment of the present application, the top surface 113 of the protruding portion 111 has an optical area 113a and a transition area 113b, the transition area 113b is located at the edge of the top surface 113, and the transition area 113b may be attached with an ink layer. In this embodiment, the shape of the first lens element 110 is special (for example, it has a protruding portion 111), and the molding precision at the edge of the lens element may be difficult to control during the shape-molding and die-sinking process for the molded glass. Therefore, in this embodiment, there is a transition area 113b between the top 113 and the side wall 114 of the protruding portion 111 of the first lens element 110, and the transition area 113b can be provided with (i.e., attached with) a light-shielding material, so that light cannot pass through such transition area so as to reduce the influence of this area on optical imaging. Preferably, the transition area has a width of about 0.03 to 0.05 mm from the side wall of the protruding portion to the center position (the width refers to a radial dimension, i.e., a dimension in the direction perpendicular to the optical axis of the optical lens). In other embodiments, the width of the transition area may be other values, depending on the molding accuracy of the molded glass.

Further, referring to FIG. 4, in an embodiment of the present application, a diameter L1 of a cross section of the protruding portion may be 1.0 to 2.0 mm. Preferably, the diameter L1 of the cross section of the protruding portion may be 1.2 to 1.6 mm. The above parameter ranges can be applied to the first lens element made of glass, but it should be noted that these parameter ranges are not limited to the glass material, and they may also be applied to the first lens element of other materials.

Further, still referring to FIG. 4, in an embodiment of the present application, a height H1 of the protruding portion may be 0.3 to 1.2 mm. Preferably, the height H1 of the protruding portion may be 0.4 to 0.8 mm. The height of the protruding portion is a height from the first structured area of the first surface to the arc top of the protruding portion, and the height is a dimension along the direction of the optical axis of the optical lens. The above parameter ranges can be applied to the first lens element made of glass, but it should be noted that these parameter ranges are not limited to the glass material, and they may also be applied to the first lens element of other materials.

Further, still referring to FIG. 4, in an embodiment of the present application, a total height H2 of the first lens element may be 0.4 to 1.6 mm. Preferably, the total height H2 of the first lens element may be 0.6 to 1.2 mm. The total height of the first lens element is a height from the second structured area of the second surface to the arc top of the protruding portion, and the height is a dimension along the direction of the optical axis of the optical lens. The above parameter ranges can be applied to the first lens element made of glass, but it should be noted that these parameter ranges are not limited to the glass material, and they may also be applied to the first lens element of other materials. Referring to FIG. 4, in this embodiment, a thickness of the structured area of the first lens element is equal to: the total height H2 of the first lens element - the height H1 of the protruding portion. Generally speaking, the smaller the thickness of the structured area of the first lens element, the more favorable the protruding portion 111 is to extend into the light-passing hole of the display screen more fully. However, if the thickness of the structured area is too small, the first lens element will be easily bent during the clamping and moving process, which may cause the active alignment to fail to achieve the expected effect, thereby resulting in a decrease in image quality. Specifically, if the thickness of the structured area is too small, when a fixture clamps the first lens element, the first lens element may be bent. Although this bending may be very small, due to the optical system (especially the optical system of the camera module of the mobile phone) is very precise and sensitive, even a very small deformation of the first lens element will cause variation in the imaging results obtained by the photosensitive chip, resulting in the failure of active alignment to achieve the expected effect.

Further, still referring to FIG. 4, in an embodiment of the present application, the outer diameter L2 of the first lens element may be 3.0 to 4.0 mm. Preferably, the outer diameter L2 of the first lens element may be 3.2 to 3.8 mm. If the outer diameter L2 is too small, the area available for arranging the first glue material may become smaller, which affects the stability and reliability of the bonding. However, if the outer diameter L2 is too large, the first lens element is likely to be bent during the clamping and moving process, which may lead to the failure of the active alignment to achieve the expected effect, thereby resulting in a decrease in image quality. Specifically, if the outer diameter L2 of the first lens element is too large, when the fixture clamps the first lens element, the first lens element may be bent. Although this bending may be very small, due to the optical system (especially the optical system of the camera module of the mobile phone) is very precise and sensitive, even a very small deformation of the first lens element will cause variation in the imaging results obtained by the photosensitive chip, resulting in the failure of active alignment to achieve the expected effect. The above parameter ranges can be applied to the first lens element made of glass, but it should be noted that these parameter ranges are not limited to the glass material, and they may also be applied to the first lens element of other materials.

Further, referring to FIG. 11, in an embodiment of the present application, the top of the second lens barrel 220 of the second lens component extends inwardly (extends toward the center of the optical system) to form a light inlet hole 222. The light inlet hole 222 refers to a light inlet hole through which the light beam enters the second lens component. For convenience of description, the inwardly extending part of the top of the second lens barrel 220 is referred to as an extension portion 221. The bottom surface of the extension portion 221 can support a first second lens element, thereby making the assembly of the second lens elements more stable. In this embodiment, the size of the aperture of the extension portion 221 of the second lens barrel 220 (i.e., the aperture of the light inlet hole 222) is related to the diameter of the imaging beam here of the optical lens, and the diameter of the imaging beam here is associated with the diameter of the optical area 113a for imaging on the top surface 113 of the protruding portion 111 of the first lens element. If the aperture of the extension portion is too small, it will limit the passage of the imaging beam, resulting in a decrease in the amount of incoming light received by the photosensitive chip. If the size is too large, it will cause the MTF value of the optical lens described in the present application (or other parameter values that can characterize the resolution of the output image of the photosensitive chip) to be reduced, and the problem of stray light will be aggravated. The imaging quality of the optical lens may be degraded due to the limitation of the imaging beam of the optical lens, the reduction of the MTF value and the aggravation of the stray light problem. Therefore, in this embodiment, a ratio of the aperture of the extension portion 221 of the second lens barrel 220 (i.e., the aperture of the light inlet hole 222 of the second lens barrel 220) to the diameter of the optical area 113a may be set to 0.80 to 1.25. Further, in some embodiments, due to the limitation of the molding process, the top surface 113 of the protruding portion 111 of the first lens element also has a transition area 113b. Since this size is relatively small, the ratio of the aperture of the extension portion 221 of the second lens barrel 220 (i.e., the aperture of the light inlet hole 222 of the second lens barrel 220) to the cross-sectional diameter of the protruding portion 111 may also be about 0.80 to 1.25. Similarly, in the embodiments of FIGS. 12 and 13, the ratio of the aperture of the light inlet hole 222 of the second lens barrel 220 to the cross-sectional diameter of the protruding portion 111 is also preferably about 0.80 to 1.25.

Further, in an embodiment of the present application, the diameter of the cross section of the protruding portion of the first lens element is less than one third of the outer diameter of the second lens barrel. The outer diameter of the second lens barrel refers to an outer diameter of the largest outer dimension of the second lens barrel. The largest outer dimension of the second lens barrel is generally located at the bottom of the second lens barrel (i.e., a side of the optical system close to the image side). Generally speaking, a plurality of second lens elements are embedded in the second lens barrel in order from small to large, and the lens element with the largest size is usually located at the bottom end. Therefore, the largest outer dimension of the second lens barrel is also generally located at the bottom of the second lens barrel. However, it should be noted that under special circumstances, the largest outer dimension of the second lens barrel may also be located at other positions. Further, in a preferred embodiment, the outer diameter of the second lens barrel (i.e., the outer diameter of the largest outer dimension of the second lens barrel) is not less than 4 mm.

Further, in an embodiment of the present application, a refractive index of a material for making the first lens element is 1.48 to 1.55. An Abbe number of the first lens element may be 50.0 to 70.1. The first lens element usually adopts an aspherical surface, and when the first lens element is made of glass material, the first lens element is usually made by using a process of molding glass. Because molding glass needs to use a mould to press the glass for processing, and usually molding a glass to make a biconcave lens will cause greater damage to the mould, thus a first surface (i.e., an object side surface) of the first lens element is preferably a convex surface. In this embodiment, the first lens element has a relatively thick thickness relative to the lateral dimension. Correspondingly, the refractive index of the molding material of the lens element is preferably 1.48 to 1.55, and the Abbe number of the first lens element is preferably 50.0 to 70.1, which can better control the imaging quality of the split lens assembly.

Further, in an embodiment of the present application, a field of view (i.e., FOV) of the optical lens is greater than 60°. As mentioned above, the optical lens of the present application has a first lens element, the first lens element has a protruding portion, and the protruding portion can extend into a light-passing hole with a smaller aperture (referring to the light-passing hole of the display screen). Therefore, the light incident surface of the optical lens (the optical area of the first surface of the first lens element) can be closer to the upper surface of the display screen, so that the angle of view of the optical lens is relatively less affected by the diameter of the small hole of the display screen. Therefore, in this embodiment, the field of view (i.e., FOV) of the optical lens may be greater than 60°. Preferably, the field of view of the optical lens may be greater than 75°.

Further, in an embodiment of the present application, a thickness of the ink layer of the first lens element is greater than 5 µm. Preferably, in order to make the ink layer have better light-shielding effect while making the thickness of the ink layer have less influence on the height H1 of the protruding portion 111, the thickness of the ink layer of the first lens element may be 15 to 30 µm.

Further, in an embodiment of the present application, in the first lens element, the side surface of the protruding portion, the first structured area of the first surface, the outer side surface of the first lens element, and the second structured area of the second surface is subjected to surface roughening. The surface roughening may be achieved, for example, by means of grinding. Roughening of the above-mentioned areas of the first lens element can not only reduce the influence of stray light on the imaging of the camera lens, but also improve the bonding strength of the ink layer and the lens elements, so that the ink is not easy to fall off during the use of the camera lens, and the influence of dirt on the imaging of the camera lens is reduced. In this embodiment, roughening can also make it easier for the surface of the first lens element to be bonded to other members. In a modified embodiment, the surface roughened area may also be one, two or three of the side surface of the protruding portion, the first structured area of the first surface, the outer side surface of the first lens element, and the second structured area of the second surface.

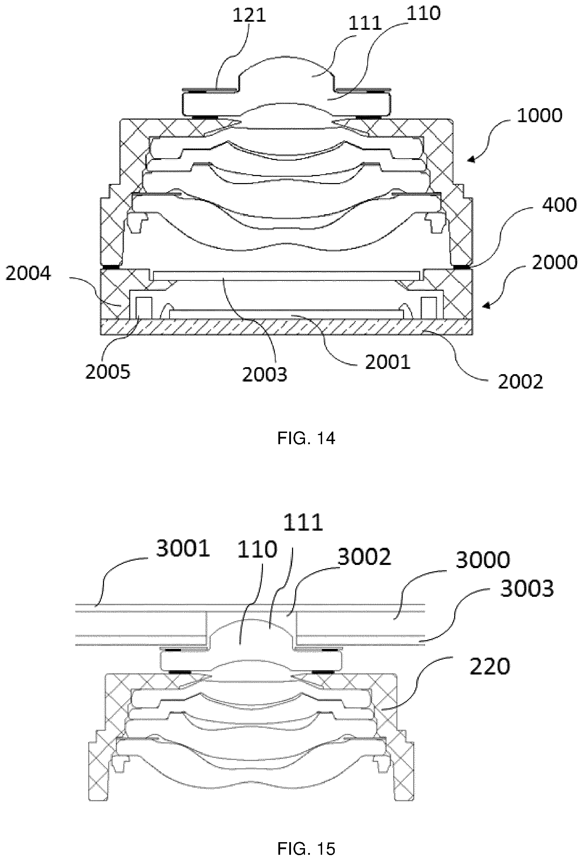

Further, FIG. 14 shows a schematic cross-sectional view of a camera module according to an embodiment of the present application. Referring to FIG. 14, according to an embodiment of the present application, a camera module is provided. The camera module includes an optical lens 1000 and a photosensitive assembly 2000. The optical lens 1000 is mounted on the photosensitive assembly 2000. Specifically, the optical lens 1000 may be bonded to the photosensitive assembly 2000 through a second glue material 400. The optical lens may be the optical lens shown in FIG. 11, and its specific structure will not be repeated here (it should be noted that FIG. 14 shows the glue material used for bonding the SOMA sheet 121 and the first lens element 110). The photosensitive assembly 2000 may include a photosensitive chip 2001, a circuit board 2002, a color filter 2003, a lens holder 2004 and an electronic element 2005. The photosensitive chip 2001 is bonded to an upper surface of the circuit board 2002. The lens holder 2004 is mounted on the upper surface of the circuit board 2002 and surrounds the photosensitive chip 2001. A top surface of the lens holder can be used as a mounting surface of the optical lens 1000. The color filter 2003 is mounted on the lens holder 2004. The electronic element 2005 may also be mounted on the upper surface of the circuit board. The photosensitive chip 2001 and the circuit board 2002 may be electrically connected through a wire bonding process. The connecting wire may be gold wire or other metal wire with good electrical conductivity.

Further, in an embodiment of the present application, a total optical length (TTL) of the camera module may be 3.4 to 4.4 mm.

Further, in an embodiment of the present application, in the optical lens, a side surface of the second lens barrel may have a cut surface. Referring to FIG. 6, in an embodiment of the present application, the optical lens 1000 includes a first lens element 110 and a second lens component. The second lens component includes a second lens barrel 220 and a plurality of second lens elements mounted in the second lens barrel 220 (the second lens elements are shielded in FIG. 6). The first lens element 110 is bonded to the top surface of the second lens barrel 220. In this embodiment, the side surface 223 of the second lens barrel 220 has a cut surface 224. The cut surface 224 enables the front camera module to be arranged at a position closer to the frame of the casing of an electronic device (e.g., the mobile phone). FIGS. 7a, 7b, and 7c show schematic top views of three cutting manners of the second lens barrel, respectively. Specifically, FIG. 7a shows a schematic top view of an example of an optical lens in which the second lens barrel has one single cut surface, FIG. 7b shows a schematic top view of an example of an optical lens in which the second lens barrel has two cut surfaces, and FIGS. 7c shows a schematic top view of an example of an optical lens in which the second lens barrel has four cut surfaces. In FIGS. 7a, 7b, and 7c, the shaded portions represent cut regions. Further, FIG. 8a shows a schematic diagram of an example in which a camera module with a cut surface is disposed at a position close to the frame of the mobile phone, and FIG. 8b shows a schematic diagram of another example in which a camera module with a cut surface is disposed at a position close to the frame of the mobile phone. It can be seen that cutting the side of the second lens barrel is helpful to dispose the camera module to a position closer to the frame of the mobile phone. As shown in FIG. 8a, the optical lens 1000 of the front camera module may have a cut surface, and the cut surface may be disposed close to a top frame 10 of a terminal device (e.g., a mobile phone). As shown in FIG. 8b, the optical lens 1000 of the front camera module may have four cut surfaces, wherein the top and right cut surfaces may be disposed close to the top frame 10a and the right frame 10b of the terminal device (e.g., the mobile phone), respectively. In FIGS. 8a and 8b, x and y coordinate axes represent two coordinate axes of a rectangular coordinate system on a plane perpendicular to the optical axis of the camera module (i.e., a plane on which the display screen surface is located), respectively.

Further, in another embodiment, the outer side surface of the first lens element may also include a cut surface, and there may be one or more cut surfaces. For its cutting manner, reference may be made to FIGS. 7a, 7b, and 7c.

Further, FIG. 15 shows a schematic cross-sectional view of an under-screen camera assembly in an embodiment of the present application. Referring to FIG. 15, according to an embodiment of the present application, an under-screen camera assembly is also provided. The under-screen camera assembly includes: a display screen 3000 and a camera module (it should be noted that only its optical lens is shown in FIG. 15, while its photosensitive assembly is not shown). The display screen 3000 has a light-passing hole 3002. Specifically, the display screen 3000 has a front surface and a back surface, wherein the front surface is a surface on which an image is displayed, and the back surface is a surface opposite thereto. In the under-screen camera assembly, the display screen 3000 has a light-passing hole 3002 so that external light can enter the camera module located under the screen. The light-passing hole 3002 may be a through hole or a blind hole. The front surface of the display screen 3000 may be covered with a transparent cover plate 3001, and at the light-passing hole 3002, the cover plate 3001 may not be penetrated (as shown in FIG. 15). When the cover plate 3001 is not punched, that is, when the cover plate 3001 is complete, it can play a better role in dust prevention and protection. It should be noted that, in other embodiments, the cover plate may also be punched at the light-passing hole 3002. Further, in this embodiment, the optical lens of the camera module may be the optical lens 1000 shown in FIG. 11, the optical lens has a first lens element 110, and the first lens element 110 has a protruding portion 111. In this embodiment, the protruding portion 111 extends into the light-passing hole 3002. The display screen 3000 may further include a substrate 3003, and the substrate 3003 is located on the back surface of the display screen 3000, because the substrate 3003 may also be referred to as a backplane. In this embodiment, the light-shielding member of the camera module may be located below the substrate 3003. In one example, the top surface of the light-shielding member may be located below the bottom surface of the substrate 3003. A small gap may remain between the top surface of the light-shielding member and the bottom surface of the substrate 3003. The solution of this embodiment can make the light incident surface of the optical lens closer to the upper surface of the display screen (in other words, it is closer to the cover plate). In this way, the optical lens can obtain a larger field of view, and is helpful to reduce the aperture of the light-through hole of the display screen on the premise of ensuring the amount of light entering the optical lens, thereby improving the visual effect and user experience of the display screen. Further, in this embodiment, the gap between the protruding portion 111 and the display screen cover plate 3001 (or referred to as a cover plate layer) may be 0.01 to 0.5 mm. The gap between the protruding portion 111 and the display screen cover plate 3001 can be understood as a gap between the arc top of the top surface of the protruding portion 111 and the display screen cover plate 3001. In this embodiment, a light-shielding layer may also be disposed in the non-optical area of the first lens element. For details, reference may be made to FIG. 3 and the corresponding aforementioned embodiments, which will not be repeated here. In another example, a gap can be reserved between the top surface of the light-shielding member and the bottom surface of the substrate 3003, and this design can prevent the camera module (or the optical lens) and the display screen from colliding. It should be noted that, in other embodiments of the present application, the SOMA sheet as the light-shielding member may also be replaced by the light-shielding member in the embodiment shown in FIG. 12 or FIG. 13.

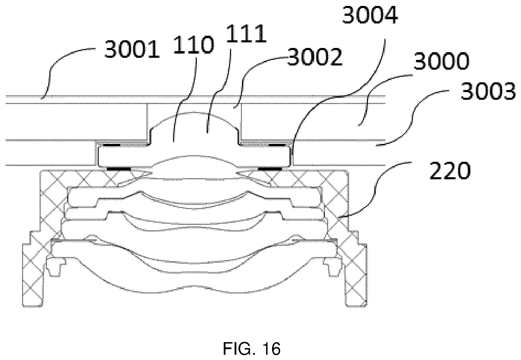

FIG. 16 shows a schematic cross-sectional view of an under-screen camera assembly in another embodiment of the present application. Referring to FIG. 16, in another embodiment of the present application, the substrate 3003 (or the backplane) of the display screen 3000 may have an opening 3004, and a diameter of the opening 3004 is larger than a diameter of an outer side surface of the first lens element 110 (for the meaning of the outer side surface, reference may be made to FIG. 11 and the description of the corresponding embodiment). The opening 3004 of the substrate 3003 may also be referred to as a mounting hole. The light-shielding member (in this embodiment, the light-shielding member is a SOMA sheet bonded to the first structured area) and the first structured area of the first lens element 110 may be located in the opening 3004. That is, at least a part of the light-shielding member and the outer side surface of the first lens element 110 is disposed in the opening 3004 (i.e., the mounting hole) of the substrate 3003. In this solution, the protruding portion 111 can more fully extend into the light-passing hole 3002 of the display screen 3000, so that the light incident surface of the optical lens is closer to the upper surface of the display screen (in other words, it is closer to the cover plate). In this way, the optical lens can obtain a larger field of view, and is helpful to reduce the aperture of the light-through hole of the display screen on the premise of ensuring the amount of light entering the optical lens, thereby improving the visual effect and user experience of the display screen. In this embodiment, the gap between the protruding portion and the display screen cover plate (or referred to as the cover plate layer) may be 0.01 to 0.5 mm. The gap between the protruding portion 111 and the display screen cover plate 3001 can be understood as a gap between the arc top of the top surface of the protruding portion 111 and the display screen cover plate 3001. In this embodiment, a light-shielding layer may also be disposed in the non-optical area of the first lens element. For details, reference may be made to FIG. 11 and the corresponding aforementioned embodiments, which will not be repeated here. It should be noted that, in other embodiments of the present application, the SOMA sheet as the light-shielding member may also be replaced by the light-shielding member in the embodiment shown in FIG. 12 or FIG. 13.

In the above embodiment, the display screen may be an OLED display screen or an LCD display screen.

Further, according to an embodiment of the present application, a method for manufacturing an optical lens is further provided. The method includes the following steps S1 to S5.

Step S1: A first lens element, a second lens component, and a light-shielding member separated from each other are prepared. Still referring to FIG. 11, the first lens element 110 has a first surface 112 located on an object side and a second surface 117 located on an image side, wherein a central region of the first surface 112 protrudes toward the object side to form a protruding portion 111, a top surface 113 of the protruding portion 111 forms an optical area 113a for imaging, the first surface 112 also has a first structured area 115 surrounding the protruding portion 111, and a side surface 114 of the protruding portion 111 connects the optical area 113a and the first structured area 115. The second lens component 200 includes a second lens barrel 220 and a plurality of second lens elements 210 mounted inside the second lens barrel 220, wherein the plurality of second lens elements 210 and the first lens element 110 together form an imageable optical system. The light-shielding member includes an annular light-shielding portion.

Step S2: The first lens element 110 and the second lens component 200 are pre-positioned. In this step, the first lens element 110, the second lens component 200 and the photosensitive assembly (which may be a photosensitive assembly to be assembled, or a photosensitive assembly or photosensitive chip equipped by an active alignment device) are arranged along an optical axis, so that the optical system composed of the first lens element lens 110 and the second lens component 200 can perform imaging. At this time, the first lens element 110 and the second lens component 200 can be regarded as a split lens assembly. In this embodiment, the second lens component 200 may be disposed on a carrying table, the carrying table may have a light-through hole, and the photosensitive assembly may be disposed below the light-through hole of the carrying table. The first lens element 110 may be clamped and moved by a six-axis movable fixture. The six axes will be specifically explained in step S3. The fixture can clamp the outer side surface of the first lens element to pick up and move the first lens element 110. In another embodiment, the fixture can pick up and move the first lens element 110 by clamping the side surface of the protruding portion.

Step S3: Active alignment is performed. In this step, the photosensitive assembly is energized / electrified to obtain an image formed by the split lens assembly, the image quality of the split lens assembly and its adjustment amount are calculated through an image algorithm such as SFR and MTF, and a relative position between a first lens component (in this embodiment, the first lens component is the first lens element 110) and the second lens component is actively adjusted in real time in at least one direction of the six-axis directions according to the adjustment amount. After one or more adjustments, the imaging quality of the split lens assembly (mainly including optical parameters such as peak value, field curvature, astigmatism, etc.) reaches a target value. The six-axis directions may be x, y, z, u, v and w directions, wherein the x, y, and z directions are horizontal and vertical directions, i.e, directions of three coordinate axes in the three-dimensional Cartesian coordinate system, and u, v and w directions are directions of rotation around x, y, and z axes, respectively.

Step S4: Finally, the first lens element 110 and the second lens component 200 are bonded by a first glue material 300. After the first glue material 300 is cured, the first lens element 300 and the second lens component 200 can be maintained at the relative positions determined by the active alignment.

Step S5: The light-shielding member is bonded to a combination of the first lens element and the second lens component, and the annular light-shielding portion is disposed above the first structured area.

In the above-mentioned embodiment, the application of the first glue material may be performed before the pre-positioning (i.e., step S2), or may be performed after the active alignment (i.e., step S3) is completed. When the application of the first glue material is performed after the active alignment (i.e., step S3) is completed, the first lens component can be moved away at first, and then the first glue material is applied on the second lens component (the top surface of the second lens barrel). After that, step S4 is performed to cure the first glue material. In the present application, the first glue material is suitable for curing by means of at least one of visible light, ultraviolet light, baking, etc.

Further, in an embodiment of the present application, in the step S1, the light-shielding member may be a first lens barrel, wherein the top of the first lens barrel extends toward the first lens element to form the annular light shielding portion. In the step S5, the first lens barrel may be bonded to the second lens barrel through a third glue material, wherein the third glue material is arranged on the top surface of the second lens barrel, and the third glue material surrounds the outer side of the first lens element.

Further, in another embodiment of the present application, in the step S1, the light-shielding member is configured as an annular SOMA sheet. In the step S5, the bottom surface of the SOMA sheet is bonded to the first structured area.

Further, in another embodiment of the present application, in the step S1, the light-shielding member includes an annular support member and a SOMA sheet, wherein the SOMA sheet is annular and constitutes the annular light-shielding portion. In the step S5, the bottom surface of the annular support member is bonded to the top surface of the second lens barrel, so that the annular support member surrounds the first lens element, and then the SOMA sheet is bonded to the top surface of the annular support member.

Further, in an embodiment of the present application, in the step S1, the first lens element is manufactured by a glass molding process, and the protruding portion is processed by a removal process such as cutting or grinding, so that the included angle between the side surface of the protruding portion and the optical axis of the optical lens is less than 15°.

Further, according to an embodiment of the present application, a method for manufacturing a camera module is further provided. The method includes step a and step b.

Step a: An optical lens is manufactured according to the method for manufacturing an optical lens (steps S1 to S5) in the aforementioned embodiment.

Step b: The optical lens and a photosensitive assembly are assembled together to obtain a camera module.

In the step b, based on an active alignment process, the optical lens and the photosensitive assembly are bonded together by a second glue material. In an embodiment, the optical lens may be assembled at first, and then the optical lens and the photosensitive assembly may be assembled. The process of assembling the optical lens and the photosensitive assembly may be a traditional active alignment process (AA process, which refers to an active alignment process without adjusting the optical system itself, that is, the camera lens and the photosensitive assembly are bonded and fixed upon adjusting the relative position between the optical lens and the photosensitive assembly), or may be a traditional bracket attachment process (HA process, that is, the camera lens is directly attached to the photosensitive assembly by means of mechanical positioning such as visual recognition).

Further, in another embodiment of the present application, in the step b, the active alignment may be performed between the second lens component and the photosensitive assembly. In addition, the active alignment between the first lens element and the second lens component in the step S3 and the active alignment between the second lens component and the photosensitive assembly in the step b may be performed simultaneously. Then, the first lens element and the second lens component (which may be bonded by the first glue material), and the second lens component and the photosensitive assembly (which may be bonded by the second glue material) are bonded, respectively, so as to form a complete camera module.

The above description is only the preferred implementations of the present application and the explanation of the applied technical principle. It should be understood by those skilled in the art that the scope of invention involved in the present application is not limited to technical solutions formed by specific combinations of the above technical features, and at the same time, should also cover other technical solutions formed by any combination of the above technical features or equivalent features thereof without departing from the concept of the invention. For example, the above features and (but not limited to) the technical features with similar functions disclosed in the present application are replaced with each other to form technical solutions.

## Claims

1. An optical lens, **characterized in that** it comprises:
a first lens element having a first surface located on an object side and a second surface located on an image side, wherein a central region of the first surface protrudes toward the object side to form a protruding portion, a top surface of the protruding portion forms an optical area for imaging, the first surface further has a first structured area surrounding the protruding portion, and a side surface of the protruding portion connects the optical area and the first structured area; and
a second lens component comprising a second lens barrel and at least one second lens element mounted inside the second lens barrel, wherein the at least one second lens element and the first lens element together constitute an imageable optical system;
wherein the second surface of the first lens element is bonded to a top surface of the second lens barrel.

2. The optical lens according to claim 1, **characterized in that** a central axis of the first lens element and a central axis of the second lens component have a non-zero included angle.

3. The optical lens according to claim 1, **characterized in that** the second surface and the top surface of the second lens barrel are bonded by a first glue material, and the first glue material supports the first lens element and the second lens component after being cured, so that a relative position of the first lens element and the second lens component is maintained at a relative position determined by active alignment, wherein the active alignment is a process of adjusting the relative position of the first lens element and the second lens component according to an actual imaging result of the optical system.

4. The optical lens according to claim 1, **characterized in that** the side surface of the protruding portion, the first structured area and an outer side surface of the first lens element are each attached with a light-shielding layer.

5. The optical lens according to claim 4, **characterized in that** the second surface has an optical area for imaging and a second structured area surrounding the optical area, and the second structured area is attached with a light-shielding layer.

6. The optical lens according to claim 1, **characterized in that** the first lens element is configured as a single lens element or as a composite lens element by fitting a plurality of sub-lens-elements with each other, there are a plurality of second lens elements, and the plurality of second lens elements are assembled together through the second lens barrel.

7. The optical lens according to claim 1, **characterized in that** the first lens element is a molded glass lens element.

8. The optical lens according to claim 7, **characterized in that** the top surface of the protruding portion has a transition area, the transition area is located at an edge of the top surface, and the transition area is attached with a light-shielding layer.

9. The optical lens according to claim 1, **characterized in that** a diameter of a cross section of the protruding portion is 1.0 to 2.0 mm.

10. The optical lens according to claim 1, **characterized in that** a diameter of a cross section of the protruding portion is 1.2 to 1.6 mm.

11. The optical lens according to claim 1, **characterized in that** a height of the protruding portion is 0.3 to 1.2 mm.

12. The optical lens according to claim 1, **characterized in that** a height of the protruding portion is 0.4 to 0.8 mm.

13. The optical lens according to claim 1, **characterized in that** an included angle between the side surface of the protruding portion and an optical axis of the optical lens is less than 15°.

14. The optical lens according to claim 1, **characterized in that** a refractive index of a material for making the first lens element is 1.48 to 1.55.

15. The optical lens according to claim 1, **characterized in that** an Abbe number of the first lens element is 50.0 to 70.1.

16. The optical lens according to claim 11, **characterized in that** a total height of the first lens element is 0.4 to 1.6 mm.

17. The optical lens according to claim 12, **characterized in that** a total height of the first lens element is 0.6 to 1.2 mm.

18. The optical lens according to claim 9, **characterized in that** an outer diameter of the first lens element is 3.0 to 4.0 mm.

19. The optical lens according to claim 10, **characterized in that** an outer diameter of the first lens element is 3.2 to 3.8 mm.

20. The optical lens according to claim 5, **characterized in that** a thickness of the light-shielding layer is greater than 5 µm.

21. The optical lens according to claim 20, **characterized in that** a thickness of the light-shielding layer is 15 to 30 µm.

22. The optical lens according to claim 5, **characterized in that** one or more of the side surface of the protruding portion, the first structured area, the outer side surface of the first lens element, and the second structured area are subjected to surface roughening.

23. The optical lens according to claim 1, **characterized in that** an outer side surface of the second lens barrel or the first lens element comprises at least one cut surface.

24. The optical lens according to claim 1, **characterized in that** a field of view of the optical lens is greater than 60°.

25. The optical lens according to claim 1, **characterized in that** a ratio of an aperture of a light inlet hole of the second lens barrel to a diameter of a cross section of the protruding portion is 0.80 to 1.25.

26. The optical lens according to claim 1, **characterized in that** the optical lens further comprises a light-shielding member comprising an annular light-shielding portion, and the annular light-shielding portion is disposed above the first structured area.

27. The optical lens according to claim 26, **characterized in that** the light-shielding member is configured as an annular SOMA sheet, and the SOMA sheet is bonded to the first structured area.

28. The optical lens according to claim 26, **characterized in that** the light-shielding member is configured as a first lens barrel, a bottom surface of the first lens barrel is bonded to the top surface of the second lens barrel, a top of the first lens barrel extends toward the first lens element to form the annular light-shielding portion.

29. The optical lens according to claim 28, **characterized in that** no glue material is disposed between the annular light-shielding portion and the first structured area.

30. The optical lens according to claim 26, **characterized in that** the light-shielding member comprises an annular support member and a SOMA sheet, the annular support member surrounds the first lens element, a bottom surface of the annular support member is bonded to the top surface of the second lens barrel, the SOMA sheet is bonded to a top surface of the annular support member, the SOMA sheet is annular, and the SOMA sheet constitutes the annular light-shielding portion.

31. The optical lens according to claim 30, **characterized in that** no glue material is disposed between the SOMA sheet and the first structured area.

32. A camera module, **characterized in that** it comprises:
the optical lens of any one of claims 1-31; and
a photosensitive assembly, wherein the optical lens is mounted on the photosensitive assembly.

33. The camera module according to claim 32, **characterized in that** a total optical length of the camera module is 3.4 to 4.4 mm.

34. An under-screen camera assembly, **characterized in that** it comprises:
a display screen having a light-passing hole; and
the camera module of claim 32 or 33, wherein the protruding portion of the camera module extends into the light-passing hole.

35. The under-screen camera assembly according to claim 34, **characterized in that** the display screen comprises a substrate, and the first structured area of the camera module is located below a bottom surface of the substrate.

36. The under-screen camera assembly according to claim 34, **characterized in that** the display screen comprises a substrate, the substrate has an opening, a diameter of the opening is larger than a diameter of an outer side surface of the first lens element, and the first structured area is located in the opening.

37. A method for manufacturing an optical lens, **characterized in that** it comprises:
1) preparing a first lens element and a second lens component separated from each other, wherein the first lens element has a first surface located on an object side and a second surface located on an image side, and wherein a central region of the first surface protrudes toward the object side to form a protruding portion, a top surface of the protruding portion forms an optical area for imaging, the first surface also has a first structured area surrounding the protruding portion, a side surface of the protruding portion connects the optical area and the first structured area, and the second lens component comprises a second lens barrel and at least one second lens element mounted inside the second lens barrel;
2) pre-positioning the first lens element and the second lens component, so that the at least one second lens element and the first lens element together constitute an imageable optical system;
3) performing active alignment on the first lens element and the second lens component; and
4) bonding a bottom surface of the first lens element to a top surface of the second lens barrel, so that a relative position of the first lens element and the second lens component is maintained at a relative position determined by active alignment.

38. The method for manufacturing an optical lens according to claim 37, **characterized in that** in the step 1), the first lens element is manufactured by a glass molding process, and the protruding portion is processed by a cutting or grinding process, so that an included angle between the side surface of the protruding portion and an optical axis of the optical lens is less than 15°.

39. A method for manufacturing a camera module, **characterized in that** it comprises:
a) manufacturing an optical lens according to the method for manufacturing an optical lens of claim 37 or 38; and
b) assembling the optical lens and a photosensitive assembly together to obtain a camera module.

40. The method for manufacturing a camera module according to claim 39, **characterized in that** in the step b), based on an active alignment process, the optical lens and the photosensitive assembly are bonded together by a second glue material.

41. The method for manufacturing a camera module according to claim 39, **characterized in that** in the step b), active alignment is performed between the second lens component and the photosensitive assembly, and the active alignment between the first lens element and the second lens component in the step 3) is performed simultaneously with the active alignment between the second lens component and the photosensitive assembly in the step b).

42. A method for manufacturing an optical lens, **characterized in that** it comprises:
1) preparing a first lens element, a second lens component, and a light-shielding member separated from each other, wherein the first lens element has a first surface located on an object side and a second surface located on an image side, and wherein a central region of the first surface protrudes toward the object side to form a protruding portion, a top surface of the protruding portion forms an optical area for imaging, the first surface also has a first structured area surrounding the protruding portion, a side surface of the protruding portion connects the optical area and the first structured area, the second lens component comprises a second lens barrel and at least one second lens element mounted inside the second lens barrel, and the light-shielding member comprise an annular light-shielding portion;
2) pre-positioning the first lens element and the second lens component, so that the at least one second lens element and the first lens element together constitute an imageable optical system;
3) performing active alignment on the first lens element and the second lens component;
4) bonding a bottom surface of the first lens element to a top surface of the second lens barrel, so that a relative position of the first lens element and the second lens component is maintained at a relative position determined by active alignment; and
5) bonding the light-shielding member to a combination of the first lens element and the second lens component, and making the annular light-shielding portion disposed above the first structured area.

43. The method for manufacturing an optical lens according to claim 42, **characterized in that**
in the step 1), the light-shielding member is configured as a first lens barrel, wherein a top of the first lens barrel extends toward the first lens element to form the annular light-shielding portion; and
in the step 5), the first lens barrel is bonded to the second lens barrel through a third glue material, wherein the third glue material is arranged on the top surface of the second lens barrel, and the third glue material surrounds an outer side of the first lens element.

44. The method for manufacturing an optical lens according to claim 42, **characterized in that**
in the step 1), the light-shielding member is configured as an annular SOMA sheet; and
in the step 5), a bottom surface of the SOMA sheet is bonded to the first structured area.

45. The method for manufacturing an optical lens according to claim 42, **characterized in that**
in the step 1), the light-shielding member comprises an annular support member and a SOMA sheet, wherein the SOMA sheet is annular and constitutes the annular light-shielding portion; and
in the step 5), a bottom surface of the annular support member is bonded to the top surface of the second lens barrel, so that the annular support member surrounds the first lens element, and then the SOMA sheet is bonded to a top surface of the annular support member.

46. A method for manufacturing a camera module, **characterized in that** it comprises:
a) manufacturing an optical lens according to the method for manufacturing an optical lens of any one of claims 42-45; and
b) assembling the optical lens and a photosensitive assembly together to obtain a camera module.
